# EUROPEAN PATENT APPLICATION

(11) **EP 4 757 292 A1**
(43) Date of publication of application: **10.06.2026**
(21) Application number: 24852378.9
(22) Date of filing: 08.08.2024
(51) Int. Cl.: H04L 67/141, H04L 67/12, H04L 67/145, H04W 76/19, H04W 4/70, G06F 3/0484, H04L 12/28, H04W 52/02, H04W 76/00

(54) **ELECTRONIC DEVICE FOR PROVIDING INTERNET OF THINGS-BASED SERVICE, AND OPERATING METHOD THEREOF**

(30) Priority: 09.08.2023 KR 20230104247; 10.11.2023 KR 20230155162
(71) Applicant: Samsung Electronics Co., Ltd., Suwon-si, Gyeonggi-do 16677 (KR)
(72) Inventor: KIM, Namjin, Suwon-si Gyeonggi-do 16677 (KR); KIM, Sijae, Suwon-si Gyeonggi-do 16677 (KR); CHO, Sanghoon, Suwon-si Gyeonggi-do 16677 (KR); PARK, Jongman, Suwon-si Gyeonggi-do 16677 (KR); SHIN, Moohyun, Suwon-si Gyeonggi-do 16677 (KR)
(74) Representative: Gulde & Partner
(86) International application number: PCT/KR2024/011824
(87) International publication number: WO 2025/034025

(57) **Abstract**

According to one embodiment, an electronic device can receive, from a server, information about a connection state of at least one external electronic device related to the electronic device, and the electronic device having received the information about the connection state of the at least one external electronic device can perform at least one operation corresponding to the connection state of the at least one external electronic device.

## Description

### [Technical Field]

An embodiment of the disclosure relates to an electronic device for providing an internet of things (IoT)-based service and an operating method thereof.

### [Background Art]

The Internet, which is a human centered connectivity network where humans generate and consume information, is now evolving to the Internet of things (IoT) network where distributed entities, such as things, exchange and process information. The Internet of everything (IoE) technology may be an example in which a big data processing technology through connection with a cloud server is combined with the IoT technology.

As technology elements, such as a sensing technology, a wired/wireless communication and network infrastructure, a service interface technology, and a security technology have been demanded for implementing the IoT technology, and various technologies for a connection between things such as a sensor network, a machine-to-machine (M2M) communication, machine type communication (MTC), and so forth have been recently researched.

Such an IoT environment may provide intelligent Internet technology (IT) services that create a new value to human life by collecting and analyzing data generated among connected things. The IoT technology may be applied to various services such as a smart home service, a smart building service, a smart city service, a smart car service or connected car service, a smart grid service, a health care service, a smart appliance service, and an advanced medical service through convergence and combination between an existing IT technology and various industrial applications.

As an IoT-based service (e.g., Samsung^{™} SmartThings service) which controls and/or manages external electronic devices (e.g., IoT devices) based on an IoT technology has been actively used, the number of external electronic devices registered in a server (e.g., Samsung^{™} SmartThings server) of the IoT-based service has been increased exponentially. At least some of the external electronic devices registered in the server may be used at least once during set time (e.g., one month). Among the external electronic devices registered in the server, the remaining external electronic devices may maintain a connection with the server, but may not be used for a long time, or may release the connection with the server.

As a calm on-boarding technology has been introduced to an IoT service, an on-boarding procedure may be simplified, and the number of external electronic devices registered in the server continues to increase according to this simplified on-boarding procedure.

In order to maintain a connection between the server and an external electronic device registered in the server, the external electronic device may need to periodically transmit a message to the server, and inform the server of a changed state of the external electronic device whenever a state of the external electronic device changes to cause the server to update the state of the external electronic device. So, if the number of external electronic devices registered in the server increases, the number of messages transmitted from the external electronic devices to the server may also increase, and thus there may be an issue of increasing server cost for maintaining the connection.

### [Disclosure]

### [Technical Solution]

According to an embodiment of the disclosure, an electronic device (102; 104; 220; 1100; 1110) may comprise communication circuitry (452), one or more processors (454) comprising processing circuitry, and memory (456) storing instructions.

According to an embodiment of the disclosure, the instructions that, when executed by the one or more processors individually or collectively, may cause the electronic device to obtain information related to an unused period based on last used time of the electronic device.

According to an embodiment of the disclosure, the instructions that, when executed by the one or more processors individually or collectively, may cause the electronic device to determine operation status of the electronic device based on the obtained information.

According to an embodiment of the disclosure, the instructions that, when executed by the one or more processors individually or collectively, may cause the electronic device to, based on the determined operation status being a first state: maintain a connection between a server (108; 230) and the electronic device, transmit, to the server via the communication circuitry, information related to an operation and/or the operation status of the electronic device, and transmit, to the server via the communication circuitry, a keep alive message at a first time interval.

According to an embodiment of the disclosure, the instructions that, when executed by the one or more processors individually or collectively, may cause the electronic device to, based on the determined operation status being changed from the first state to a second state: maintain the connection between the server and the electronic device, and transmit, to the server via the communication circuitry, a signal indicating that the operation status of the electronic device has been changed to the second state, and refrain from transmitting, to the server via the communication circuitry, the information related to the operation and/or the operation status of the electronic device.

According to an embodiment of the disclosure, the instructions that, when executed by the one or more processors individually or collectively, may cause the electronic device to, based on the determined operation status being changed from the second state to a third state: transmit, to the server via the communication circuitry, a signal indicating that the operation status of the electronic device has been changed to the third state.

According to an embodiment of the disclosure, the first state may correspond to the unused time of a service being less than a first period, the second state may correspond to the unused time of the service being greater than the first period and less than or equal to a second period, and the third state may correspond to the unused time of the service being greater than the second period.

According to an embodiment of the disclosure, the unused period may be reset based on an occurrence of an event related to usage of the service.

According to an embodiment of the disclosure, a server (108; 230) may comprise communication circuitry (402), one or more processors (404) comprising processing circuitry, and memory (406) storing instructions.

According to an embodiment of the disclosure, the instructions that, when executed by the one or more processors individually or collectively, may cause the server to transmit, to an electronic device (102; 104; 220; 1100; 1110) via the communication circuitry, information about a first state corresponding to an unused period of a service less than a first period, a second state corresponding to the unused time of the service greater than the first period and less than or equal to a second period, and a third state corresponding to the unused time of the service greater than the second period.

According to an embodiment of the disclosure, the instructions that, when executed by the one or more processors individually or collectively, may cause the server to, based on receiving, from the electronic device via the communication circuitry, a signal indicating that operation status of the electronic device is the first state: receive, from an external electronic device (101) via the communication circuitry, a signal requesting to reset the unused period of the electronic device, and transmit, to the electronic device via the communication circuitry, a signal requesting the electronic device to reset the unused period of the electronic device, after receiving the signal requesting to reset the unused period of the electronic device.

According to an embodiment of the disclosure, the instructions that, when executed by the one or more processors individually or collectively, may cause the server to, based on receiving, from the electronic device via the communication circuitry, a signal indicating that the operation status of the electronic device is the second state: receive, from the external electronic device via the communication circuitry, the signal requesting to reset the unused period of the electronic device, transmit, to the electronic device via the communication circuitry, the signal requesting the electronic device to reset the unused period of the electronic device, after receiving the signal requesting to reset the unused period of the electronic device, and receive, from the electronic device via the communication circuitry, a signal indicating that the operation status of the electronic device has been changed to the first state.

According to an embodiment of the disclosure, the instructions that, when executed by the one or more processors individually or collectively, may cause the server to receive, from the electronic device via the communication circuitry, a signal indicating that the operation status of the electronic device is the third state.

According to an embodiment of the disclosure, a non-transitory computer readable medium storing one or more instructions may be provided.

According to an embodiment of the disclosure, the one or more instructions, when executed by one or more processors (454) of an electronic device (102; 104; 220; 1100; 1110) individually or collectively, may cause the electronic device to perform one or more operations.

According to an embodiment of the disclosure, the one or more operations may comprise obtaining information related to an unused period based on last used time of the electronic device.

According to an embodiment of the disclosure, the one or more operations may comprise determining operation status of the electronic device based on the obtained information.

According to an embodiment of the disclosure, the one or more operations may comprise, based on the determined operation status being a first state: maintaining a connection between a server (108; 230) and the electronic device, transmitting, to the server, information related to an operation and/or the operation status of the electronic device, and transmitting, to the server, a keep alive message at a first time interval.

According to an embodiment of the disclosure, the one or more operations may comprise, based on the determined operation status changing from the first state to a second state: maintaining the connection between the server and the electronic device, and transmitting, to the server, a signal indicating that the operation status of the electronic device has been changed to the second state, and refraining from transmitting, to the server, the information related to the operation and/or the operation status of the electronic device.

According to an embodiment of the disclosure, the one or more operations may comprise, based on the determined operation status being changed from the second state to a third state: transmitting, to the server, a signal indicating that the operation status of the electronic device has been changed to the third state.

According to an embodiment of the disclosure, the first state may correspond to the unused time of a service being less than a first period, the second state may correspond to the unused time of the service being greater than the first period and less than or equal to a second period, and the third state may correspond to the unused time of the service being greater than the second period.

According to an embodiment of the disclosure, the unused period may be reset based on an occurrence of an event related to usage of the service.

### [Description of Drawings]

FIG. 1 is a block diagram schematically illustrating an electronic device within a network environment according to an embodiment.
FIG. 2 is a diagram for describing a process of providing an IoT service in a wireless communication network according to an embodiment.
FIG. 3 is a block diagram illustrating an internal structure of an electronic device 101 according to various embodiments.
FIG. 4A is a block diagram illustrating an internal structure of a server 230 according to an embodiment.
FIG. 4B is a block diagram illustrating an internal structure of an external electronic device 220 according to an embodiment.
FIG. 5 is a flowchart illustrating an operating process of an electronic device 101 according to an embodiment.
FIG. 6 is a signal flowchart illustrating a procedure of managing a connection state in an IoT-based service according to an embodiment.
FIG. 7 is a signal flowchart illustrating a procedure of managing a connection state in an IoT-based service according to an embodiment.
FIG. 8 is a signal flowchart illustrating a procedure of managing a connection state in an IoT-based service according to an embodiment.
FIG. 9 is a diagram illustrating a hub 210 and a server 230 in a wireless communication network 200 according to an embodiment.
FIG. 10 is a signal flowchart between a hub 210 and a server 230 for providing an IoT-based service according to an embodiment.
FIG. 11 is a diagram for describing a procedure of managing a connection state in an IoT-based service according to an embodiment.
FIG. 12 is a diagram for describing a guide message provided in a No connection state according to an embodiment.
FIG. 13 is a diagram for describing a guide message provided in a No connection state according to an embodiment.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe a specific embodiment, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an electronic device will be described in an embodiment of the disclosure, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the electronic device may be a device having a communication function such as, for example, a mobile phone, a personal digital assistant (PDA), a smart phone, a wireless MODEM, and a notebook.

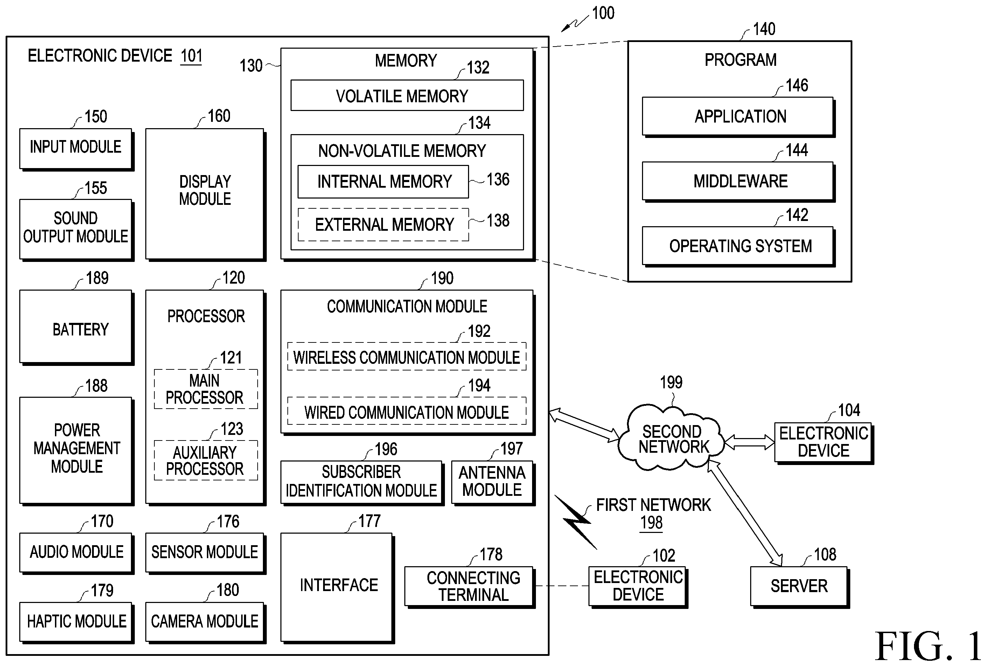

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) (a tablet and/or a smart watch) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

It should be noted that the communication module 190 may also be referred to as a "communication circuit", and thus the communication module 190 and the communication circuit 190 may be used interchangeably as necessary. The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

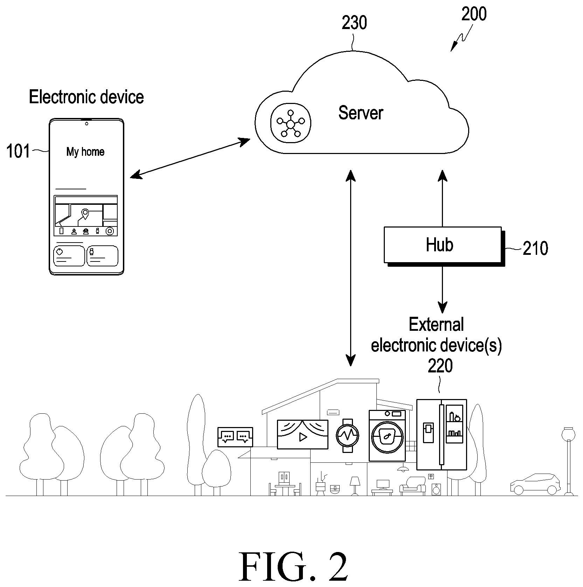

FIG. 2 is a diagram for describing a process of providing an IoT service in a wireless communication network 200 according to an embodiment.

Referring to FIG. 2, the wireless communication network 200 may be an IoT network (e.g., a smart home network).

According to an embodiment, an electronic device 101 (e.g., an electronic device 101 in FIG. 1) may provide an IoT service (e.g., a Samsung^{™} SmartThings service) which controls and/or manages external electronic devices (e.g., IoT devices) (e.g., an electronic device 102 or an electronic device 104 in FIG. 1) based on an IoT technology.

According to an embodiment, a hub 210 may be located at a set space (e.g., home and/or an office).

According to an embodiment, a server 230 may register an external electronic device(s) 220 using the IoT service and remotely control the registered external electronic device(s) 220. The server 230 may interwork with the electronic device 101 to remotely control the external electronic device(s) 220.

According to an embodiment, the external electronic device(s) 220 may be a device which interworks with the electronic device 101, the hub 210, and/or the server 230 to provide the IoT service. According to an embodiment, the external electronic device(s) 220 may be an IoT device (e.g., a home appliance such as a TV, a light, an air conditioner, a blind, an air purifier, a camera, an oven, and/or a speaker). According to an embodiment, the external electronic device(s) 220 may be located at a set space. In an embodiment, other external electronic devices (e.g., an application market server) may further exist in the wireless communication network 200.

According to an embodiment, the server 230 may receive data from the external electronic device(s) 220. According to an embodiment, the server 230 may communicate with the electronic device 101, the hub 210, and/or the external electronic device(s) 220 via the Internet. The server 230 may interwork with another server (not shown) which provides the IoT service to communicate with another external electronic device registered in the other server. Hereinafter, for convenience of a description, an IoT device directly connected to the server 230 will be referred to as a "Direct connected device", an IoT device connected to the server 230 via the hub 210 will be referred to as a "Hub connected device," and an IoT device connected to the server 230 via the other server will be referred to as a "Cloud connected device."

According to an embodiment, the hub 210 may communicate with the external electronic device(s) 220 based on any one of various communication schemes. The various communication schemes may include a ZigBee scheme and/or a Z-Wave scheme. According to an embodiment, the hub 210 may communicate with the external electronic device(s) 220 via a LAN.

According to an embodiment, the external electronic device(s) 220 may be located at various spaces (e.g., a living room, a family room, a kitchen, an entrance, and a laundry storage in a home space, and a first to Nth offices, a kitchen, and an entrance within an office space) within the wireless communication network 200, and may communicate with the electronic device 101 through the server 230.

According to an embodiment, the external electronic device(s) 220 may include various types of electronic devices which operate based on the IoT service. In an embodiment, the external electronic device(s) 220 may include a sensor or a switch for sensing a surrounding environment. The external electronic device(s) 220 may operate based on a user input or may operate automatically if a set condition is satisfied.

According to an embodiment, the electronic device 101 may receive data from the external electronic device(s) 220 and display a screen corresponding to the received data. According to an embodiment, when an IoT-based application (e.g., a Samsung^{™} SmartThings application) for controlling the external electronic device(s) 220 disposed in the various spaces within the wireless communication network 200 is executed, the electronic device 101 may output a user interface (UI) related to the executed IoT-based application.

According to an embodiment, a method of managing a connection state of the external electronic device(s) 220 according to time during which the external electronic device(s) 220 is not used, and informing a disconnection between the external electronic device(s) 220 and the server 230 when a connection between the external electronic device(s) 220 and the server 230 is released as the external electronic device(s) 220 is not used for set time or longer may be provided.

According to an embodiment, a method of informing the disconnection between the external electronic device(s) 220 and the server 230 if the connection between the external electronic device(s) 220 and the server 230 is released as the external electronic device(s) 220 is not used for the set time or longer, and automatically restoring the connection between the external electronic device(s) 220 and the server 230 or informing that it is difficult to automatically restore the connection between the external electronic device(s) 220 and the server 230 if it is difficult (or impossible) to automatically restore the connection between the external electronic device(s) 220 and the server 230 may be provided.

According to an embodiment, based on time during the external electronic device(s) 220 is not used, a connection state of the external electronic device(s) 220 may be any one of a first connection state, a second connection state, and a third connection state as shown in Table 1 below. Hereinafter, for convenience of a description, the first connection state will be referred to as a "Full connection state", the second connection state will be referred to as a "Partial connection state", and the third connection state will be referred to as a "No connection.".

**[Table 1]**

| Connection state | Description |
|---|---|
| Full connection | State in which information related to resources of external electronic device may be transmitted to server |
| Partial connection | State in which only keep alive signal is transmitted to server, and connection between server and external electronic device is maintained |
| No connection | State in which connection between server and external electronic device is released |

As shown in Table 1, the Full connection state may be a state in which the external electronic device(s) 220 may transmit information related to resources for the external electronic device(s) 220 to the server 230. In an embodiment, the resources for the external electronic device(s) 220 may be unique to the external electronic device(s) 220 and may include settings related to the external electronic device(s) 220 (e.g., settings related to an operation of the external electronic device(s) 220). For example, if the external electronic device(s) 220 is an air conditioner, the settings related to the external electronic device(s) 220 may include power on/off, a current temperature, a mode, a sub-device, humidity, wind strength, and/or a set temperature.

As shown in Table 1, the Partial connection state may be a state in which the external electronic device(s) 220 transmits only a keepalive signal to the server 230, and a connection between the external electronic device(s) 220 and the server 230 is maintained. According to an embodiment, in the Partial connection state, the external electronic device(s) 220 may not transmit the information related to the resources for the external electronic device(s) 220 to the server 230, but may transmit the keepalive signal to the server 230.

As shown in Table 1, the No connection state may be a state in which the connection between the external electronic device(s) 220 and the server 230 is released. In the No connection state, the external electronic device(s) 220 may be registered in the server 230, but the connection between the external electronic device(s) 220 and the server 230 may be released.

According to an embodiment, unused time per connection state for the external electronic device(s) 220 may be set by the electronic device 101, the hub 210, and/or the server 230 for registering the external electronic device(s) 220 in the server 230. For example, the electronic device 101 or the server 230 may set the unused time per connection state through a menu (or a web page) for setting the unused time per connection state. Information about the unused time per connection state for the external electronic device(s) 220 may be stored in the server 210.

According to an embodiment, if the external electronic device(s) 220 is a Direct connected device, the unused time per connection state may be uniquely set for the external electronic device(s) 220, so the unused time per connection state for the external electronic device(s) 220 may be different from that of another external electronic device.

According to an embodiment, if the external electronic device(s) 220 is a Hub connected device, the unused time per connection state may be set based on unused time per connection state set in the hub 210.

For example, the unused time per connection state may be set as shown in Table 2 below.

**[Table 2]**

| Category | mnid | setupid | Connection state | Time |
|---|---|---|---|---|
| TV | 0AJK | 101 | Full connection | 1-28 days |
| | | | Partial connection | 29-90 days |
| | | | No connection | 90 days or more |
| Air conditioner | 0AJT | 500 | Full connection | 1-60 days |
| | | | Partial connection | 61-180 days |
| | | | No connection | 181 days or more |
| Hub | 0AFD | 611 | Full connection | 1-28 days |
| | | | Partial connection | 29 days-1 year |
| | | | No connection | 1 year or more |

In Table 2, mnId may represent a manufacturer identifier (ID) of the external electronic device(s) 220, and setupId may represent a scheme for on-boarding the external electronic device(s) 220 to the hub 210. The scheme for on-boarding the external electronic device(s) 220 to the hub 210 may be set for each of the external electronic device(s) 220. For example, if the external electronic device(s) 220 is a light bulb, the scheme for on-boarding to the hub 210 may represent a scheme for pressing a set button for set time (e.g., 3 seconds). The scheme for on-boarding the external electronic device(s) 220 to the hub 210 may be stored and managed by the server 230. In Table 2, if the external electronic device(s) 220 is a TV, unused time for the Full connection state is set to time of 1 to 28 days, unused time for the Partial connection state is set to time of 29 to 90 days, and unused time for the No connection state is set to time of 90 days or more.

In Table 2, if the external electronic device(s) 220 is an air conditioner, unused time for the Full connection state is set to time of 1 to 60 days, unused time for the Partial connection state is set to time of 61 to 180 days, and unused time for the No connection state is set to time of 181 days or more.

In Table 2, for the hub 210, unused time for the Full connection state is set time of to 1 to 28 days, unused time for the Partial connection state is set to time of 28 days to 1 year, and unused time for the No connection state is set to time of more than 1 year.

According to an embodiment, a parameter (e.g., deviceConnectionState capability) for managing a connection state may be provided. The deviceConnectionState capability may include attributes and commands, and may be expressed as shown in Table 3 below.

**[Table 3]**

| ATTRIBUTES | | | |
|---|---|---|---|
| Name | Description | Type | Values |
| deviceConnectionState | connection state according to unused time of device | enum | fullConnection partialConnection noConnection |
| | . fullConnection - state in which all 0CF resources may be transferred | | |
| | . partialConnection - state in which connection is maintained by transferring only Keep alive | | |
| | . noConnection - state in which connection is released | | |
| refreshTime | Set the refresh time | String [Iso8601Date] | 2022-09-27 18:00:00.000. |

| COMMANDS | |
|---|---|
| Name | Description |
| refreshConnection (request, version) | Initialize unused interval of device |

| COMMAND ARGUMENTS | | |
|---|---|---|
| Name | Description | Type |
| Requester | caller name (ex. st-app-aos) | string |
| version | version (ex.1.8.00.22) | string |

As shown in Table 3, deviceConnectionState may be changed based on the connection state of the external electronic device(s) 220.

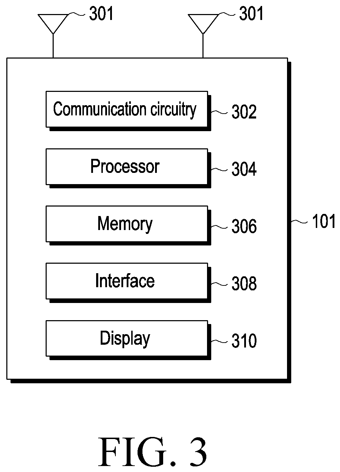

FIG. 3 is a block diagram illustrating an internal structure of an electronic device 101 according to various embodiments.

Referring to FIG. 3, the electronic device 101 (e.g., an electronic device 101 in FIG. 1 or 2) may be a device which implements an IoT-based service in a wireless communication network (e.g., an IoT network). For example, an IoT-based network may be a smart home network, and the IoT-based service may be a SmartThings service.

The electronic device 101 (e.g., a smart phone) may include antennas 301, communication circuitry 302, a processor 304, memory 306, an interface 308, and/or a display 310.

Referring to FIG. 3, the electronic device 101 may be a device supporting a long term evolution (LTE) scheme, a Zigbee scheme, a Z-Wave scheme, a Wi-Fi scheme, a Bluetooth low energy (BLE) scheme, a UWB scheme, and/or a GPS scheme. The electronic device 101 may include a communication circuitry 302 (e.g., a communication module 190 in FIG. 1) for transmitting and receiving signals to and from an external electronic device (e.g., an electronic device 102 in FIG. 1 or an external electronic device(s) 220 in FIG, 2), a hub (e.g., a hub 210 in FIG, 2), and/or a server (e.g., a server 108 in FIG. 1 and/or a server 230 in FIG. 2) using one or more antennas 301. In an embodiment, the one or more antennas 301 may be implemented as a part of an antenna module 198 in FIG. 1.

According to an embodiment, the communication circuitry 302 may include a plurality of communication circuits, and the plurality of communication circuits may include a communication circuit which is based on the LTE scheme, the BLE scheme, the UWB scheme, the Zigbee scheme, the Z-wave scheme, and/or the Wi-Fi scheme. According to an embodiment, the electronic device 101 may not include a separate communication circuit which is based on each of the LTE scheme, the BLE scheme, the UWB scheme, the Zigbee scheme, the Z-Wave scheme, and/or the Wi-Fi scheme, and may include a communication circuit which is based on at least two of the LTE scheme, the Bluetooth scheme, the BLE scheme, the UWB scheme, the Zigbee scheme, the Z-Wave scheme, and/or the Wi-Fi scheme, or all of the LTE scheme, the BLE scheme, the UWB scheme, the Zigbee scheme, the Z-Wave scheme, and/or the Wi-Fi scheme. According to an embodiment, the communication circuit which is based on the at least two of the LTE scheme, the BLE scheme, the UWB scheme, the Zigbee scheme, the Z-Wave scheme, and/or the Wi-Fi scheme, or all of the LTE scheme, the BLE scheme, the UWB scheme, the Zigbee scheme, the Z-Wave scheme, and/or the Wi-Fi scheme may be the communication circuitry 302.

The electronic device 101 may include an interface 308 (e.g., an interface 177 in FIG. 1) which provides a wired and/or wireless interface for communicating with components outside a network. In an embodiment, at least a portion of the one or more antennas 301, the communication circuitry 302, or the interface 308 may be implemented as at least a portion of the communication module 190 and the antenna module 198 in FIG. 1.

The electronic device 101 may include a processor 304 (e.g., a processor 120 in FIG. 1) which may be implemented with one or more single-core processors or one or more multi-core processors, and a memory 306 (e.g., a memory 130 in FIG. 1) which stores instructions for an operation of the electronic device 101.

According to an embodiment, the memory 306 may include a UI related to an application (e.g., a SmartThings application) for executing an IoT-based service, and images, user information, documents, databases, or related data for providing the UI. According to an embodiment, if the application for executing the IoT-based service is executed under the control of the processor 304, a display 310 (e.g., a display module 160 in FIG. 1) may display the UI related to the executed application.

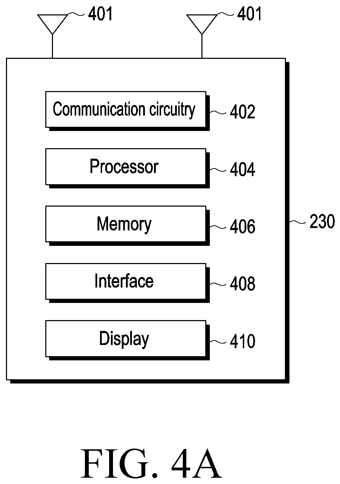

FIG. 4A is a block diagram illustrating an internal structure of a server 230 according to an embodiment.

Referring to FIG. 4A, the server 230 (e.g., a server 108 in FIG. 1 or a server 230 in FIG. 2) may be a device which implements an IoT-based service (e.g., a SmartThings service) in a wireless communication network (e.g., an IoT network). For example, the IoT network may be a smart home network. The server 230 may include a communication circuit 402, a processor 404, memory 406, an interface 408, and/or a display 410. The communication circuit 402, the processor 404, the memory 406, the interface 408, and/or the display 410 may each be implemented to be similar to or substantially the same as communication circuitry 302, a processor 304, memory 306, an interface 308, and/or a display 310 described in FIG. 3, so a detailed description thereof will be omitted.

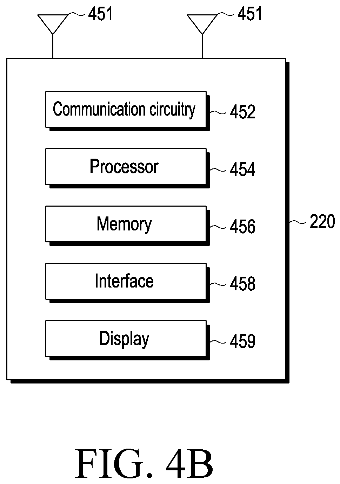

FIG. 4B is a block diagram illustrating an internal structure of an external electronic device 220 according to an embodiment.

Referring to FIG. 4B, the external electronic device 220 (e.g., an electronic device 102 or an electronic device 104 in FIG. 1, or an external electronic device(s) 220 in FIG. 2) may be a device which implements an IoT-based service (e.g., a SmartThings service) in a wireless communication network (e.g., an IoT network). For example, the IoT network may be a smart home network. The external electronic device 220 may include communication circuitry 452, a processor 454, memory 456, an interface 458, and/or a display 450. The communication circuitry 452, the processor 454, the memory 456, the interface 458, and/or the display 450 may each be implemented to be similar to or substantially the same as communication circuitry 302, a processor 304, memory 306, an interface 308, and/or a display 310 described in FIG. 3, so a detailed description thereof will be omitted.

According to an embodiment of the disclosure, an electronic device (101) may comprise communication circuitry (190; 302), a processor (120; 304) operably connected to the communication circuitry, and memory (130) storing instructions.

According to an embodiment of the disclosure, the instructions that, when executed by the processor, may cause the electronic device to receive, from a server (108; 230) via the communication circuitry, information about a connection state of at least one external electronic device (102; 104; 220; 1100; 1110) related to the electronic device.

According to an embodiment of the disclosure, the instructions that, when executed by the processor, may cause the electronic device to perform at least one operation corresponding to the connection state of the at least one external electronic device.

According to an embodiment of the disclosure, the connection state of the at least one external electronic device may include at least one of a first connection state in which unused time of a service in the at least one external electronic device is less than first time, a second connection state in which the unused time of the service in the at least one external electronic device is greater than or equal to the first time and less than second time, or a third connection state in which the unused time of the service in the at least one external electronic device is greater than or equal to the second time.

According to an embodiment of the disclosure, in case that the connection state is the first connection state, the at least one operation corresponding to the connection state may comprise transmitting, to the server via the communication circuitry, a signal commanding the server to reset the unused time of the at least one external electronic device.

According to an embodiment of the disclosure, in case that the connection state is the second connection state, the at least one operation corresponding to the connection state may comprise transmitting, to the server via the communication circuitry, a signal commanding the server to reset the unused time of the service in the at least one external electronic device.

According to an embodiment of the disclosure, in case that the connection state is the second connection state, the at least one operation corresponding to the connection state may comprise receiving, from the server via the communication circuitry, a signal for updating operation status of the at least one external electronic device.

According to an embodiment of the disclosure, in case that the connection state is the second connection state, the at least one operation corresponding to the connection state may comprise updating the operation status of the at least one external electronic device, based on the signal for updating the operation status of the at least one external electronic device.

According to an embodiment of the disclosure, in case that the connection state is the third connection state, the at least one operation corresponding to the connection state may comprise outputting a message for guiding a user manipulation for reconnection between the server and the at least one external electronic device.

According to an embodiment of the disclosure, the instructions that, when executed by the processor, may be configured to cause the electronic device to receive, from the server via the communication circuitry, the information about the connection state of the at least one external electronic device, based on identifying a start of the service.

According to an embodiment of the disclosure, the first connection state may include a state in which at least one of data or control information is exchanged between the at least one external electronic device and the server.

According to an embodiment of the disclosure, the second connection state may include a state in which only a keep alive signal is exchanged between the at least one external electronic device and the server.

According to an embodiment of the disclosure, the third connection state may include a state in which a connection between the at least one external electronic device and the server is released.

According to an embodiment of the disclosure, an electronic device (102; 104; 220; 1100; 1110) may comprise communication circuitry (452), a processor (454) operably connected to the communication circuitry, and memory (456) storing instructions.

According to an embodiment of the disclosure, the instructions that, when executed by the processor, may cause the electronic device to receive information related to unused time per connection state of the electronic device from a server (108; 230) via the communication circuitry.

According to an embodiment of the disclosure, the instructions that, when executed by the processor, may cause the electronic device to set a connection state based on the information and unused time of a service.

According to an embodiment of the disclosure, the at least one processor may be configured to perform at least one operation corresponding to the set connection state.

According to an embodiment of the disclosure, the connection state may include at least one of a first connection state in which the unused time of the service is less than first time, a second connection state in which the unused time of the service is greater than or equal to the first time and less than second time, or a third connection state in which the unused time of the service is greater than or equal to the second time.

According to an embodiment of the disclosure, in case that the connection state is the first connection state, the at least one operation corresponding to the connection state may comprise receiving, from the server via the communication circuitry, a signal commanding to reset the unused time of the service.

According to an embodiment of the disclosure, in case that the connection state is the first connection state, the at least one operation corresponding to the connection state may comprise resetting the unused time of the service based on the signal.

According to an embodiment of the disclosure, in case that the connection state is the first connection state, the at least one operation corresponding to the connection state may comprise transmitting, to the server via the communication circuitry, a keep alive signal.

According to an embodiment of the disclosure, in case that the connection state is the second connection state, the at least one operation corresponding to the connection state may comprise receiving, from the server via the communication circuitry, a signal commanding to reset the unused time of the service.

According to an embodiment of the disclosure, in case that the connection state is the second connection state, the at least one operation corresponding to the connection state may comprise resetting the unused time of the service based on the signal.

According to an embodiment of the disclosure, in case that the connection state is the second connection state, the at least one operation corresponding to the connection state may comprise changing the connection state from the second connection state to the first connection state.

According to an embodiment of the disclosure, in case that the connection state is the second connection state, the at least one operation corresponding to the connection state may comprise transmitting, to the server via the communication circuitry, a signal requesting to change the connection state of the electronic device from the second connection state to the first connection state.

According to an embodiment of the disclosure, in case that the connection state is the second connection state, the at least one operation corresponding to the connection state may comprise transmitting, to the server via the communication circuitry, a signal for updating operation status of the electronic device after transmitting the signal requesting to change the connection state of the electronic device from the second connection state to the first connection state.

According to an embodiment of the disclosure, in case that the connection state is the second connection state, the at least one operation corresponding to the connection state may comprise transmitting, to the server via the communication circuitry, a keep alive signal.

According to an embodiment of the disclosure, the first connection state may include a state in which at least one of data or control information is exchanged between the electronic device and the server.

According to an embodiment of the disclosure, the second connection state may include a state in which only a keep alive signal is exchanged between the electronic device and the server.

According to an embodiment of the disclosure, the third connection state may include a state in which a connection between the electronic device and the server is released.

According to an embodiment of the disclosure, a server (108; 230) may comprise communication circuitry (402), a processor (404) operably connected to the communication circuitry, and memory (406) storing instructions.

According to an embodiment of the disclosure, the instructions that, when executed by the processor, may cause the electronic device to transmit, to an electronic device (101) via the communication circuitry, information about a connection state of at least one external electronic device (102; 104; 220; 1100; 1110) related to the electronic device.

According to an embodiment of the disclosure, the instructions that, when executed by the processor, may cause the electronic device to perform at least one operation corresponding to the connection state of the at least one external electronic device.

According to an embodiment of the disclosure, the connection state of the at least one external electronic device may include at least one of a first connection state in which unused time of a service in the at least one external electronic device is less than first time, a second connection state in which the unused time of the service in the at least one external electronic device is greater than or equal to the first time and less than second time, or a third connection state in which the unused time of the service in the at least one external electronic device is greater than or equal to the second time.

According to an embodiment of the disclosure, in case that the connection state is the first connection state, the at least one operation corresponding to the connection state may comprise receiving, from the electronic device via the communication circuitry, a first signal commanding the server to reset the unused time of the at least one external electronic device.

According to an embodiment of the disclosure, in case that the connection state is the first connection state, the at least one operation corresponding to the connection state may comprise transmitting, to the at least one external electronic device via the communication circuitry, a second signal commanding to reset the unused time of the at least one external electronic device based on the first signal.

According to an embodiment of the disclosure, in case that the connection state is the first connection state, the at least one operation corresponding to the connection state may comprise receiving, from the at least one external electronic device via the communication circuitry, a keep alive signal.

According to an embodiment of the disclosure, in case that the connection state is the second connection state, the at least one operation corresponding to the connection state may comprise receiving, from the electronic device via the communication circuitry, a first signal commanding the server to reset the unused time of the at least one external electronic device.

According to an embodiment of the disclosure, in case that the connection state is the second connection state, the at least one operation corresponding to the connection state may comprise transmitting, to the at least one external electronic device via the communication circuitry, a second signal commanding to reset the unused time of the at least one external electronic device based on the first signal.

According to an embodiment of the disclosure, in case that the connection state is the second connection state, the at least one operation corresponding to the connection state may comprise receiving, from the at least one external electronic device via the communication circuitry, a third signal requesting to change the connection state of the at least one external electronic device from the second connection state to the first connection state.

According to an embodiment of the disclosure, in case that the connection state is the second connection state, the at least one operation corresponding to the connection state may comprise changing the connection state of the at least one external electronic device from the second connection state to the first connection state based on the third signal.

According to an embodiment of the disclosure, in case that the connection state is the second connection state, the at least one operation corresponding to the connection state may comprise receiving, from the at least one external electronic device via the communication circuitry, a fourth signal for updating operation status of the at least one external electronic device.

According to an embodiment of the disclosure, in case that the connection state is the second connection state, the at least one operation corresponding to the connection state may comprise transmitting, to the electronic device via the communication circuitry, a fifth signal for updating the operation status of the at least one external electronic device based on the fourth signal.

According to an embodiment of the disclosure, in case that the connection state is the second connection state, the at least one operation corresponding to the connection state may comprise receiving a keep alive signal from the at least one external electronic device via the communication circuitry.

According to an embodiment of the disclosure, the instructions that, when executed by the processor, may cause the electronic device to receive, from the electronic device via the communication circuitry, a message requesting information about the connection state of the at least one external electronic device before transmitting the information about the connection state of the at least one external electronic device.

According to an embodiment of the disclosure, the first connection state may include a state in which at least one of data or control information is exchanged between the at least one external electronic device and the server.

According to an embodiment of the disclosure, the second connection state may include a state in which only a keep alive signal is exchanged between the at least one external electronic device and the server.

According to an embodiment of the disclosure, the third connection state may include a state in which a connection between the at least one external electronic device and the server is released.

According to an embodiment of the disclosure, an electronic device (102; 104; 220; 1100; 1110) may comprise communication circuitry (452), one or more processors (454) comprising processing circuitry, and memory (456) storing instructions.

According to an embodiment of the disclosure, the instructions that, when executed by the one or more processors individually or collectively, may cause the electronic device to obtain information related to an unused period based on last used time of the electronic device.

According to an embodiment of the disclosure, the instructions that, when executed by the one or more processors individually or collectively, may cause the electronic device to determine operation status of the electronic device based on the obtained information.

According to an embodiment of the disclosure, the instructions that, when executed by the one or more processors individually or collectively, may cause the electronic device to, based on the determined operation status being a first state: maintain a connection between a server (108; 230) and the electronic device, transmit, to the server via the communication circuitry, information related to an operation and/or the operation status of the electronic device, and transmit, to the server via the communication circuitry, a keep alive message at a first time interval.

According to an embodiment of the disclosure, the instructions that, when executed by the one or more processors individually or collectively, may cause the electronic device to, based on the determined operation status being changed from the first state to a second state: maintain the connection between the server and the electronic device, and transmit, to the server via the communication circuitry, a signal indicating that the operation status of the electronic device has been changed to the second state, and refrain from transmitting, to the server via the communication circuitry, the information related to the operation and/or the operation status of the electronic device.

According to an embodiment of the disclosure, the instructions that, when executed by the one or more processors individually or collectively, may cause the electronic device to, based on the determined operation status being changed from the second state to a third state: transmit, to the server via the communication circuitry, a signal indicating that the operation status of the electronic device has been changed to the third state.

According to an embodiment of the disclosure, the first state may correspond to the unused time of a service being less than a first period, the second state may correspond to the unused time of the service being greater than the first period and less than or equal to a second period, and the third state may correspond to the unused time of the service being greater than the second period.

According to an embodiment of the disclosure, the unused period may be reset based on an occurrence of an event related to usage of the service.

According to an embodiment of the disclosure, the first period and the second period may be defined based on a device type corresponding to the electronic service.

According to an embodiment of the disclosure, the instructions, when executed by the one or more processors individually or collectively, may cause the electronic device to: identify the occurrence of the event related to the usage of the service in the second state, and change the operation status of the electronic device from the second state to the first state.

According to an embodiment of the disclosure, the instructions, when executed by the one or more processors individually or collectively, may cause the electronic device to: transmit, to the server via the communication circuitry, a signal indicating that the operation status of the electronic device has been changed to the first state.

According to an embodiment of the disclosure, the instructions, when executed by the one or more processors individually or collectively, may cause the electronic device to: after transmitting the signal indicating that the operation status of the electronic device has been changed to the first state, receive, from the server via the communication circuitry, a signal requesting the electronic device to reset the unused period, and in response to the signal requesting the electronic device to reset the unused period, reset the unused period.

According to an embodiment of the disclosure, the instructions, when executed by the one or more processors individually or collectively, may cause the electronic device to: identify the occurrence of the event related to the usage of the service in the third state, establish a connection between the server and the electronic device, and change the operation status of the electronic device from the third state to the first state.

According to an embodiment of the disclosure, the instructions, when executed by the one or more processors individually or collectively, may cause the electronic device to: transmit, to the server via the communication circuitry, a signal indicating that the operation status of the electronic device has been changed to the first state.

According to an embodiment of the disclosure, the information related to the unused period based on the last used time of the electronic device may be received from the server.

According to an embodiment of the disclosure, the instructions, when executed by the one or more processors individually or collectively, may cause the electronic device to, as at least part of obtaining the information related to the unused period based on the last used time of the electronic device: identify the last used time of the service of the electronic device, and identify the unused period based on the last used time of the service of the electronic device to obtain the information related to the unused period based on the last used time of the electronic device.

According to an embodiment of the disclosure, the instructions, when executed by the one or more processors individually or collectively, may cause the electronic device to: transmit, to the server via the communication circuitry, a keep alive message at a second time interval in the second state.

According to an embodiment of the disclosure, the second time interval may be longer than or equal to the first time interval.

According to an embodiment of the disclosure, the information related to the operation and/or the operation status of the electronic device may include information indicating that the operation and/or the operation status of the electronic device have been changed.

According to an embodiment of the disclosure, the instructions, when executed by the one or more processors individually or collectively, may cause the electronic device to: identify the occurrence of the event related to the usage of the service in the first state, and transmit, to the server via the communication circuitry, a signal indicating that the operation status of the electronic device is the first state.

According to an embodiment of the disclosure, the instructions, when executed by the one or more processors individually or collectively, may cause the electronic device to: after transmitting the signal indicating that the operation status of the electronic device is the first state, receive, from the server via the communication circuitry, a signal requesting the electronic device to reset the unused period, and in response to the signal requesting the electronic device to reset the unused period, reset the unused period.

According to an embodiment of the disclosure, a server (108; 230) may comprise communication circuitry (402), one or more processors (404) comprising processing circuitry, and memory (406) storing instructions.

According to an embodiment of the disclosure, the instructions that, when executed by the one or more processors individually or collectively, may cause the server to transmit, to an electronic device (102; 104; 220; 1100; 1110) via the communication circuitry, information about a first state corresponding to an unused period of a service less than a first period, a second state corresponding to the unused time of the service greater than the first period and less than or equal to a second period, and a third state corresponding to the unused time of the service greater than the second period.

According to an embodiment of the disclosure, the instructions that, when executed by the one or more processors individually or collectively, may cause the server to, based on receiving, from the electronic device via the communication circuitry, a signal indicating that operation status of the electronic device is the first state: receive, from an external electronic device (101) via the communication circuitry, a signal requesting to reset the unused period of the electronic device, and transmit, to the electronic device via the communication circuitry, a signal requesting the electronic device to reset the unused period of the electronic device, after receiving the signal requesting to reset the unused period of the electronic device.

According to an embodiment of the disclosure, the instructions that, when executed by the one or more processors individually or collectively, may cause the server to, based on receiving, from the electronic device via the communication circuitry, a signal indicating that the operation status of the electronic device is the second state: receive, from the external electronic device via the communication circuitry, the signal requesting to reset the unused period of the electronic device, transmit, to the electronic device via the communication circuitry, the signal requesting the electronic device to reset the unused period of the electronic device, after receiving the signal requesting to reset the unused period of the electronic device, and receive, from the electronic device via the communication circuitry, a signal indicating that the operation status of the electronic device has been changed to the first state.

According to an embodiment of the disclosure, the instructions that, when executed by the one or more processors individually or collectively, may cause the server to receive, from the electronic device via the communication circuitry, a signal indicating that the operation status of the electronic device is the third state.

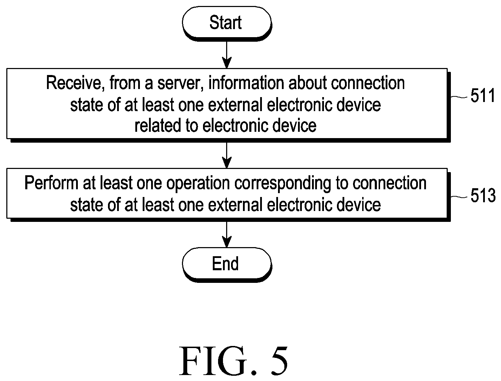

FIG. 5 is a flowchart illustrating an operating process of an electronic device 101 according to an embodiment.

Referring to FIG. 5, in operation 511, a processor (e.g., a processor 120 in FIG. 1 or a processor 304 in FIG. 3) of an electronic device (e.g., an electronic device 101 in FIG. 1, 2, or 3) may receive, from a server (e.g., a server 108 in FIG. 1 or a server 230 in FIG. 4) via communication circuitry (e.g., a communication module 190 in FIG. 1 or communication circuitry 302 in FIG. 3), information about a connection state of at least one external electronic device (e.g., an electronic device 102 or an electronic device 104 in FIG. 1, an external electronic device(s) 220 in FIG. 2, or an external electronic device 220 in FIG. 4B) related to the electronic device. In an embodiment, the connection state of the at least one external electronic device may include at least one of a first connection state in which unused time of a service (e.g., an IoT-based service) in the at least one external electronic device is less than a first time, a second connection state in which the unused time of the service in the at least one external electronic device is greater than or equal to the first time and less than a second time, or a third connection state in which the unused time of the service in the at least one external electronic device is greater than or equal to the second time. For example, the IoT-based service may be a Samsung^{™} SmartThings service. For example, the first connection state may include a Full connection state, the second connection state may include a Partial connection state, and/or the third connection state may include a No connection state. The Full connection state, the Partial connection state, and/or the No connection state may be implemented to be similar to or substantially the same as described in FIG. 2, so a detailed description thereof will be omitted herein.

The electronic device, which receives the information about the connection state of the at least one external electronic device, may perform at least one operation corresponding to the connection state of the at least one external electronic device in operation 513.

According to an embodiment, in case that the connection state is the first connection state, the at least one operation corresponding to the connection state may comprise transmitting, to the server via the communication circuit, a signal commanding the server to reset the unused time of the at least one external electronic device.

According to an embodiment, in case that the connection state is the second connection state, the at least one operation corresponding to the connection state may comprise transmitting, to the server via the communication circuit, a signal commanding the server to reset the unused time of the at least one external electronic device, receiving, from the server via the communication circuit, a signal for updating operation status of the at least one external electronic device, and updating the operation status of the at least one external electronic device, based on the signal for updating the operation status of the at least one external electronic device.

According to an embodiment, in case that the connection state is the third connection state, the at least one operation corresponding to the connection state may comprise outputting a message for guiding a user manipulation for reconnection between the server and the at least one external electronic device.

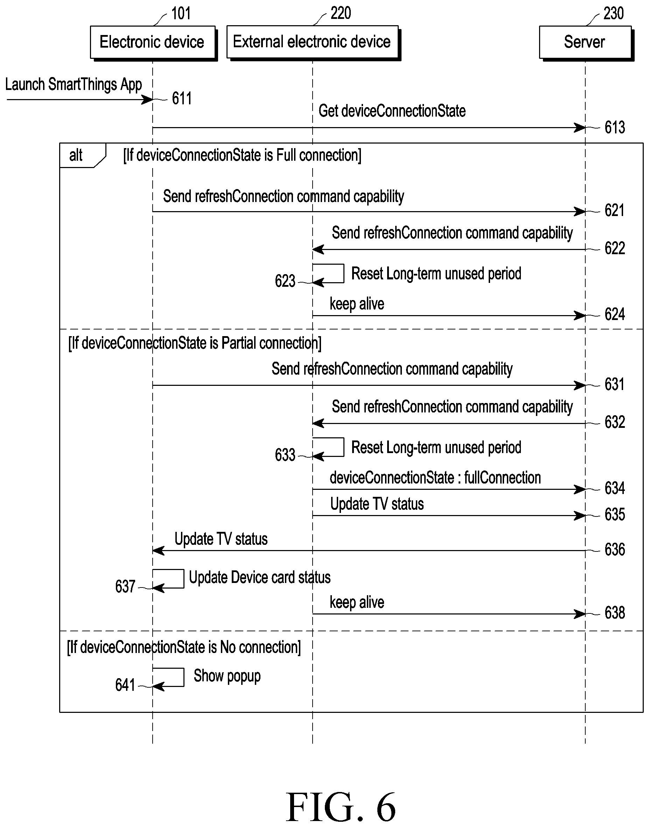

FIG. 6 is a signal flowchart illustrating a procedure of managing a connection state in an IoT-based service according to an embodiment.

Referring to FIG. 6, in operation 611, an electronic device 101 (e.g., an electronic device 101 in FIG. 1, 2, or 3) (e.g., a processor 120 in FIG. 1 or a processor 304 in FIG. 3) may identify a user input for starting an IoT-based application (e.g., a Samsung^{™} SmartThings application) corresponding to an IoT-based service (e.g., a Samsung^{™} SmartThings service).

The electronic device 101 which identifies the user input for starting the IoT-based application may obtain, via a server 230 (e.g., a server 108 in FIG. 1 or a server 230 in FIG. 2 or 4A), information related to a connection state for an external electronic device 220 (e.g., an electronic device 102 or an electronic device 104 in FIG. 1, an external electronic device(s) 220 in FIG. 2, or an external electronic device 220 in FIG. 4B) which interworks with the electronic device 101 to provide the IoT-based service in operation 613 (Get diviceConnectionState). In FIG. 6, the external electronic device 220 may be, for example, a Direct connected device. If the external electronic device 220 supports connection state management, the electronic device 101 may obtain, from the server 230, the information related to the connection state for the electronic device 220. For example, if deviceConnectionState Capability of the external electronic device 220 is stored in the server 230, the electronic device 101 may obtain, from the server 230, the information related to the connection state for the electronic device 220. If the external electronic device 220 does not support the connection state management, the electronic device 101 may not obtain, from the server 230, the information related to the connection state for the electronic device 220. In FIG. 6, a case where the external electronic device 220 supports the connection state management will be described as an example.

First, an operation in a case that the information related to the connection state of the external electronic device 220 obtained from the server 230 indicates that the connection state of the external electronic device 220 is a Full connection state may be described as follows.

If the connection state of the external electronic device 220 is the Full connection state, in operation 621, the electronic device 101 may transmit, to the server 230, a signal including a connection refresh (hereinafter, it will be referred to as "refreshConnection") command for commanding to reset unused time in order to reset the unused time of the external electronic device 220. The server 230 which receives the signal including the refreshConnection command from the electronic device 101 may transmit, to the external electronic device 220, a signal including a refreshConnection command for commanding to reset the unused time in order to reset the unused time of the external electronic device 220 in operation 622. The external electronic device 220 which receives the signal including the refreshConnection command from the server 230 may reset the unused time of the external electronic device 220 in operation 623. The external electronic device 220 which resets the unused time of the external electronic device 220 may transmit a keep alive signal to the server 230 based on a set period in operation 624. The set period for transmitting the keep alive signal may be adaptively set according to network status.

Second, an operation in a case that the information related to the connection state of the external electronic device 220 obtained from the server 230 indicates that the connection state of the external electronic device 220 is a Partial connection state may be described as follows.

If the connection state of the external electronic device 220 is the Partial connection state, in operation 631, the electronic device 101 may transmit, to the server 230, a signal including a refreshConnection command for commanding to reset unused time in order to reset the unused time of the external electronic device 220. The server 230 which receives the signal including the refreshConnection command from the electronic device 101 may transmit, to the external electronic device 220, a signal including a refresh Connection command for commanding to reset the unused time in order to reset the unused time of the external electronic device 220 in operation 632. The external electronic device 220 which receives the signal including the refreshConnection command from the server 230 may reset the unused time of the external electronic device 220 in operation 633. The external electronic device 220 which resets the unused time of the external electronic device 220 may change the connection state of the external electronic device 220 to the Full connection state, and transmit, to the server 230, a signal including a deviceConnectionState attribute for requesting to change the connection state of the external electronic device 220 to the Full connection state in operation 634. The server 230 which receives the signal including the deviceConnectionState attribute from the external electronic device 220 may change the connection state of the external electronic device 220 to the Full connection state.

The external electronic device 220 may transmit a signal for updating operation status of the external electronic device 220 to the server 230 in operation 635. In an embodiment, the operation status of the external electronic device 220 may represent status related to an operation of the external electronic device 220. In an embodiment, the operation status of the external electronic device 220 may be managed by the IoT-based application. For example, the IoT-based application may provide a device card which manages the operation status of the external electronic device 220. The device card may be implemented per IoT device. In FIG. 6, it will be assumed that the external electronic device 220 is a TV, so the signal for updating the operation status of the external electronic device 220 in operation 635 is expressed as "Update TV status." If the external electronic device 220 is the TV, the operation status of the external electronic device 220 may include, for example, power on/off, a volume level, a channel number, and/or a channel list. The server 230 which receives the signal for updating the operation status of the external electronic device 220 from the external electronic device 220 may transmit a signal for updating the operation status of the external electronic device 220 to the electronic device 101 in operation 636. The electronic device 101 which receives, from the server 230, the signal for updating the operation status of the external electronic device 220 may update the operation status of the external electronic device 220 in operation 637. The external electronic device 220 which resets the unused time of the external electronic device 220 may transmit a keep alive signal to the server 230 based on the set period in operation 638.

Third, an operation in a case that the information related to the connection state of the external electronic device 220 obtained from the server 230 indicates that the connection state of the external electronic device 220 is a No connection state may be described as follows.

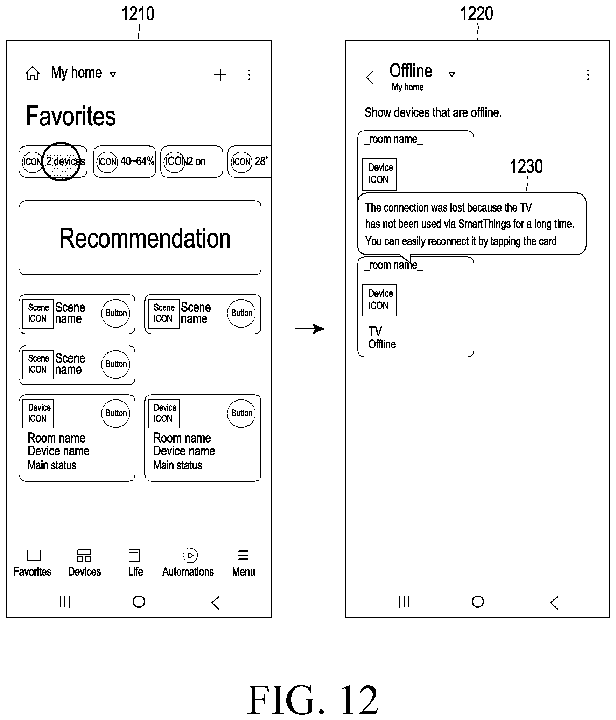

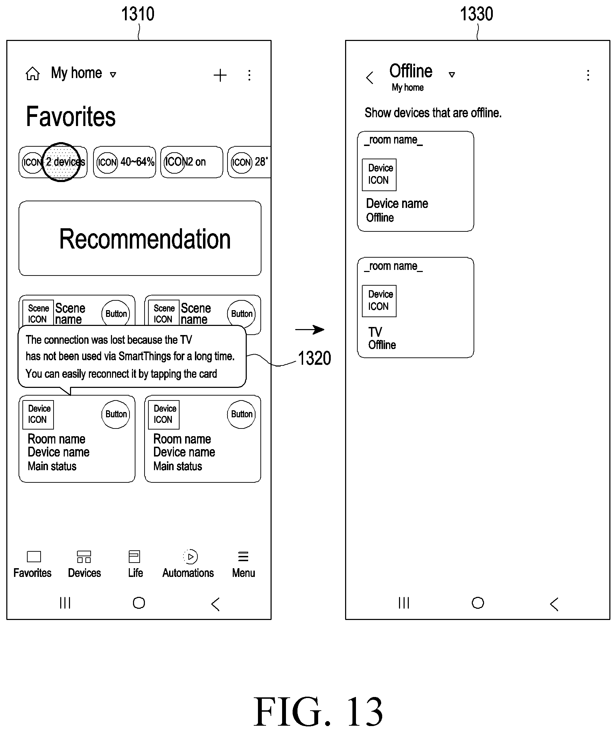

If the connection state of the external electronic device 220 is the No connection state, the electronic device 101 may identify that a connection between the server 230 and the external electronic device 220 is released in operation 641. The electronic device which identifies that the connection between the server 230 and the external electronic device 220 is released may output a guide message for reconnection between the server 230 and the external electronic device 220 in operation 641. The guide message may be provided in a form of, for example, a UI pop-up. For example, the guide message may be a message for announcing that the connection between the server 230 and the external electronic device 220 is released as the external electronic device 220 is not used for a long time in the IoT-based service, and user manipulation for the reconnection between the server 230 and the external electronic device 220. By outputting the guide message in this way, it may cause a user to easily attempt to reconnect the server 230 and the external electronic device 220. The guide message will be described below with reference to FIGS. 12 and 13, so a detailed description thereof will be omitted herein.

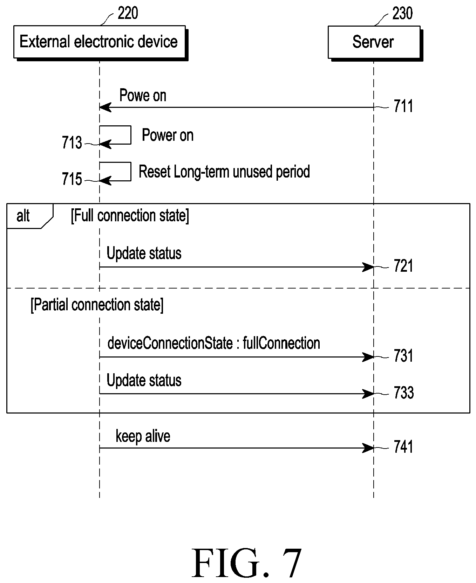

FIG. 7 is a signal flowchart illustrating a procedure of managing a connection state in an IoT-based service according to an embodiment.

Referring to FIG. 7, in operation 711, a server 230 (e.g., a server 108 in FIG. 1, or a server 230 in FIG. 2, 4A, or 6), which provides an IoT-based service (e.g., a Samsung^{™} SmartThings Service), may transmit a signal including an operation command (e.g., a power on command) to an external electronic device 220 (e.g., an electronic device 102 or an electronic device 104 in FIG. 1, an external electronic device(s) 220 in FIG. 2, or an external electronic device 220 in FIG. 4B or 6) in operation 711. For example, the server 230 may transmit a signal including the operation command to the external electronic device 220 corresponding to an automation service of the IoT-based service or a user input. In FIG. 7, the external electronic device 220 may be, for example, a Direct connected device.

The external electronic device 220, which receives the signal including the operation command from the server 230, may perform an operation corresponding to the operation command in operation 713. For example, when the operation command is a power on command, the external electronic device 220 may be powered on in operation 713. The external electronic device 220 which performs the operation corresponding to the operation command may reset unused time of the external electronic device 220 in operation 715.

The external electronic device 220, which resets the unused time, may operate based on a connection state of the external electronic device 220 before resetting the unused time.

First, if the connection state of the external electronic device 220 before resetting the unused time is a Full connection state, the external electronic device 220 may transmit a signal for updating the operation status of the external electronic device 220 in operation 721. According to an embodiment, the operation status of the external electronic device 220 may indicate status related to an operation of the external electronic device 220. Since the external electronic device 220 is powered on in operation 713, the operation status of the external electronic device 220 included in the signal for updating the operation status of the external electronic device 220 transmitted in operation 721 may indicate power-on status.

Second, if the connection state of the external electronic device 220 before resetting the unused time is a Partial connection state, the external electronic device 220 may transmit a signal including a deviceConnectionState attribute for changing the connection state of the external electronic device 220 to the Full connection state in operation 731. The external electronic device 220, which transmits the signal including the deviceConnectionState attribute, may transmit a signal for updating the operation status of the external electronic device 220 in operation 733. In an embodiment, the operation status of the external electronic device 220 may indicate status related to an operation of the external electronic device 220. Since the external electronic device 220 is powered on in operation 713, the operation status of the external electronic device 220 included in the signal for updating the operation status of the external electronic device 220 transmitted in operation 733 may indicate the power on status.

After transmitting the signal for updating the operation status of the electronic device 220 in operation 721 or 733, the external electronic device 220 may transmit a keep alive signal to the server 230 based on a set period in operation 741. The set period for transmitting the keep alive signal may be adaptively set according to network status.

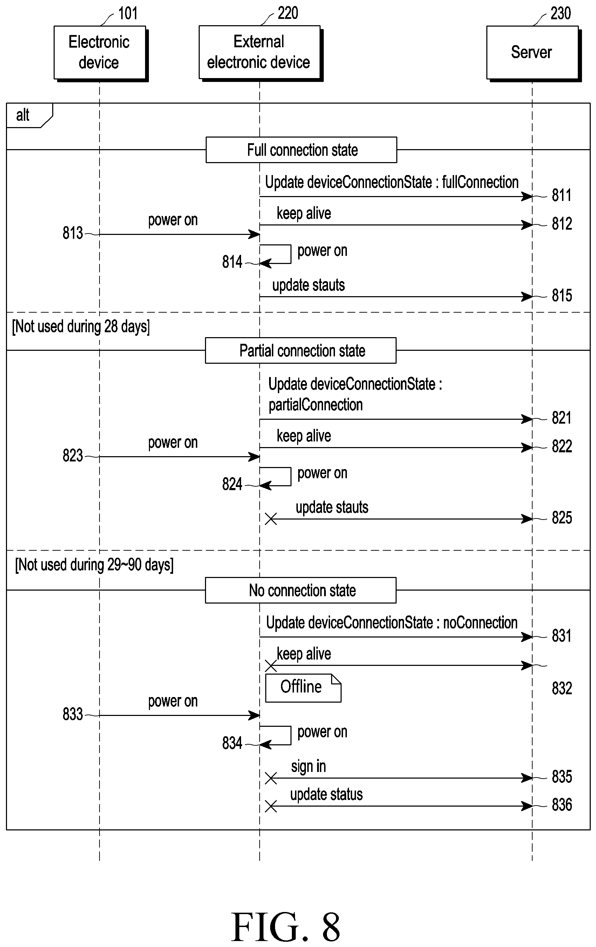

FIG. 8 is a signal flowchart illustrating a procedure of managing a connection state in an IoT-based service according to an embodiment.

Referring to FIG. 8, an external electronic device 220 (e.g., an electronic device 102 or an electronic device 104 in FIG. 1, an external electronic device(s) 220 in FIG. 2, or an external electronic device 220 in FIG. 4B, 6, or 7) which provides an IoT-based service (e.g., a Samsung^{™} SmartThings service) may operate differently according to a connection state of the external electronic device 220, and this will be described in detail as follows. In FIG. 8, it will be assumed that time set for a Full connection state of the external electronic device 220 is 1 to 28 days, time set for a Partial connection state of the external electronic device 220 is 29 to 90 days, and time set for a No connection state of the external electronic device 220 is 91 days or more. In FIG. 8, the external electronic device 220 may be, for example, a Direct connected device.

First, a case that the connection state of the external electronic device 220 is the Full connection state may be described as follows.

In operation 811, the external electronic device 220 may transmit a signal including a deviceConnectionState attribute for changing the connection state of the external electronic device 220 to the Full connection state to a server 230 (e.g., a server 108 in FIG. 1 or a server 230 in FIG. 2, 4A, 6, or 7). The external electronic device 220, which transmits the signal including the deviceConnectionState attribute, may transmit a keep alive signal to the server 230 based on a set period in operation 812. The set period for transmitting the keep alive signal may be adaptively set according to network status. Thereafter, the external electronic device 220 may identify a user input for commanding power-on in operation 813. The external electronic device 220, which identifies the user input for commanding the power-on, may perform a power-on operation in operation 814. The external electronic device 220, which performs the power-on operation, may transmit a signal for updating operation status of the external electronic device 220 in operation 815. According to an embodiment, the operation status of the external electronic device 220 may indicate status related to an operation of the external electronic device 220. Since the external electronic device 220 performs the power-on operation in operation 814, the operation status of the external electronic device 220 included in the signal for updating the operation status of the external electronic device 220 transmitted in operation 815 may indicate power-on status.

Second, a case that the connection state of the external electronic device 220 is the Partial connection state may be described as follows.

In operation 821, the external electronic device 220 may transmit a signal including a deviceConnectionState attribute for changing the connection state of the external electronic device 220 to the Partial connection state to the server 230. The external electronic device 220, which transmits the signal including the deviceConnectionState attribute, may transmit a keep alive signal to the server 230 based on a set period in operation 822. Thereafter, the external electronic device 220 may identify a user input for commanding power-on in operation 823. The external electronic device 220, which identifies the user input for commanding the power-on, may perform a power-on operation in operation 824. Since the connection state of the external electronic device 220 is the Partial connection state, the external electronic device 220, which performs the power-on operation, may not transmit a signal for updating operation status of the external electronic device 220 (Operation 825). In this case, a connection between the external electronic device 220 and the server 230 may be maintained, but the operation status of the external electronic device 220 may not be updated to the server 230.

Third, a case that the connection state of the external electronic device 220 is the No connection state may be described as follows.

In operation 831, the external electronic device 220 may transmit a signal including a deviceConnectionState attribute for changing the connection state of the external electronic device 220 to the No connection state to the server 230. Since the connection state of the external electronic device 220 is the No connection state, that is, since the connection between the external electronic device 220 and the server 230 is released, the external electronic device 220, which transmits the signal including the deviceConnectionState attribute, may not transmit a keep alive signal to the server 230 (Operation 832). Thereafter, the external electronic device 220 may identify a user input for commanding power-on in operation 833. The external electronic device 220, which identifies the user input for commanding the power-on, may perform a power-on operation in operation 834. Since the connection state of the external electronic device 220 is the No connection state, the external electronic device 220, which performs the power-on operation, may not perform a sign-in operation for the server 230 (Operation 835). Since the connection state of the external electronic device 220 is the No connection state, the external electronic device 220, which performs the power-on operation, may not transmit a signal for updating operation status of the external electronic device 220 (Operation 836).

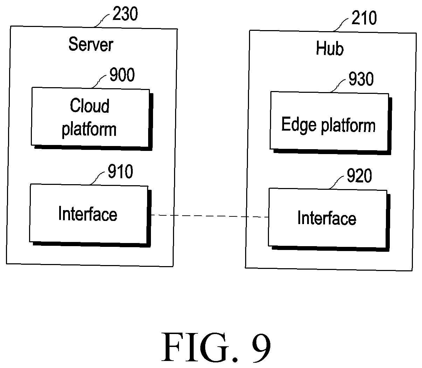

FIG. 9 is a diagram illustrating a hub 210 and a server 230 in a wireless communication network 200 according to an embodiment.

Referring to FIG. 9, a server 230 (e.g., a server 108 in FIG. 1, or a server 230 in FIG. 2, 4A, 6, 7, or 8) and a hub 210 (e.g., a hub 210 in FIG. 2) may interwork with an external electronic device (e.g., an electronic device 102 or an electronic device 104 in FIG. 1, an external electronic device 220(s) in FIG. 2, or an external electronic device 220 in FIG. 4B, 6, 7, or 8) to provide an IoT-based service (e.g., an automation service of Samsung^{™} SmartThings service).

In an embodiment, if the external electronic device is a Hub connected device, a connection state of the external electronic device may be controlled by the hub 210. Unused time per connection state of the hub 210 may be expressed as in Table 4 below. The connection state of the hub 210 may be reset by the unused time of the hub 210 based on a connection state of at least one external electronic device connected to the hub 210. In an embodiment, for the at least one external electronic device connected to the hub 210, the unused time per connection state may be set as in Table 4 below.

**[Table 4]**

| | | | | |
|---|---|---|---|---|
| Hub | 0AFD | 611 | Full connection | 1-28 days |
| | | | Partial connection | 28 days -1 year |
| | | | No connection | 1 year or more |

In Table 4, 0AFD indicates an mnid of the hub 210, and 611 indicates a setupId of the hub 210.

According to an embodiment, the server 230 may include a cloud platform 900 and/or an interface 910. The interface 910 may be an application programming interface (API). The cloud platform 900 may manage an I/O function for the IoT-based service and listen to an event via an event pipeline for the IoT-based service. In an embodiment, the event may be implemented in a form of a message based on a communication scheme (e.g., a Zigbee scheme, a Z-Wave scheme, and/or a LAN) set between the external electronic device and the hub 210.

The interface 910 may be a set of hypertext transfer protocol (HTTP) clients interacting with the API of the IoT-based service.

According to an embodiment, the hub 210 may include an interface 920 and/or an edge platform 930. The interface 920 may be a public API. The edge platform 930 may manage the I/O function for the IoT-based service and listen to the event via the event pipeline for the IoT-based service. The interface 920 may be a set of HTTP clients interacting with the API of the IoT-based service. The interface 920 may evaluate a condition (e.g., an automation condition) set for the IoT-based service and control an operation of the external electronic device based on an evaluation result.

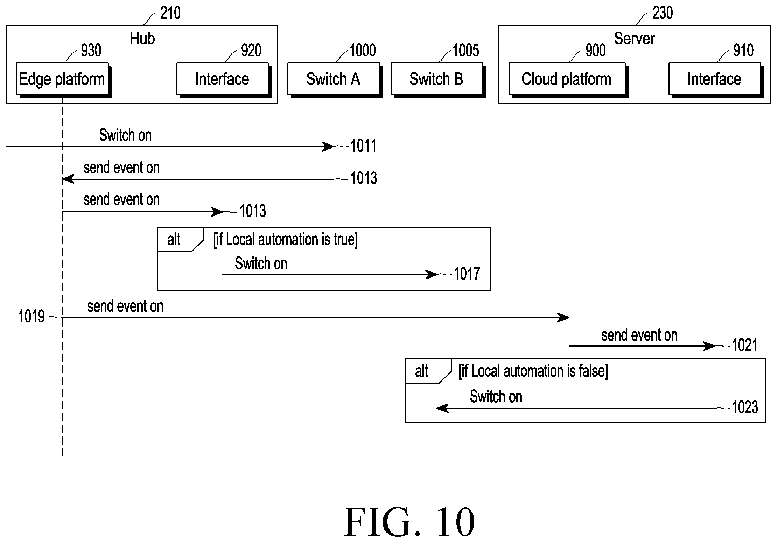

FIG. 10 is a signal flowchart between a hub 210 and a server 230 for providing an IoT-based service according to an embodiment.

Referring to FIG. 10, a server 230 (e.g., a server 108 in FIG. 1, or a server 230 in FIG. 2, 4A, 6, 7, 8, or 9) may include a cloud platform 900 (e.g., a cloud platform 900 in FIG. 9) and an interface 910 (e.g., an interface 910). A hub 210 (e.g., a hub 210 in FIG. 2 or 9) may include an interface 920 (e.g., an interface 920 in FIG. 9) and an edge platform 930 (e.g., an edge platform 930 in FIG. 9). The server 230 and the hub 210 may interwork with a plurality of external electronic devices (e.g., an electronic device 102 or an electronic device 104 in FIG. 1, an external electronic device(s) in FIG. 2, or an external electronic device 220 in FIG. 4B, 6, 7, or 8) (e.g., a first external electronic device and a second external electronic device) to provide an IoT-based service (e.g., an automation service of a Samsung^{™} SmartThings service). For example, in FIG. 10, it will be assumed that the server 230 and the hub 210 interwork with the first external electronic device (e.g., switch A 1000) and the second external electronic device (e.g., switch B 1005), thereby the automation service being provided. For example, in FIG. 10, it will be assumed that the automation condition includes a condition in which the switch B 1005 is turned on if the switch A 1000 is turned on. For example, in FIG. 10, each of the switch A 1000 and the switch B 1005 may be a Hub connected device.

In operation 1011, the switch A 1000 may identify a user input for commanding switch-on for the switch A 1000. The switch A 1000, which identifies the user input for commanding the switch-on, may transmit, to the hub 210, an event for commanding the switch-on, e.g., an event-on, for the switch A 1000 in operation 1013. The edge platform 930 of the hub 210, which receives the event-on from the switch A 1000, may transfer, to the interface 920, an event-on for requesting to execute an automation service corresponding to an automation condition in a cast that the switch A 1000 is turned on in operation 1015.

The interface 920, which receives the event-on from the edge platform 930, may identify whether the automation condition in a case that the switch A 1000 is turned on is set in operation 1017. If the automation condition in a case that the switch A 1000 is turned on is set (Operation 1017-Yes), the interface 920 may set operation status of the switch B 1005 to "switch-on." Based on the interface 920 setting the operation status of the switch B 1005 to "switch-on", the edge platform 930 may transmit, to the server 230, an event-on for commanding switch-on for the switch B 1005 in operation 1019.

The cloud platform 900 of the server 230, which receives, from the hub 210, the event-on for commanding the switch-on for the switch B 1005, may transfer, to the interface 910, event-on for commanding switch-on for the switch B 1005 in operation 1021. The interface 910, which receives, from the cloud platform 900, the event-on for commanding the switch-on for the switch B 1005, may transmit, to the switch B 1005, a signal for commanding switch-on for the switch B 1005 to cause the switch B 1005 to be turned on in operation 1023.

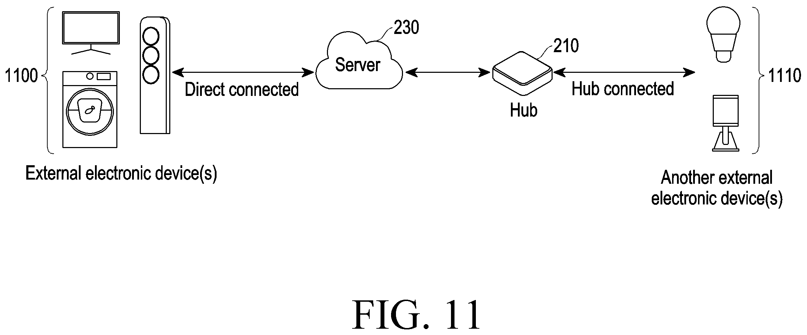

FIG. 11 is a diagram for describing a procedure of managing a connection state in an IoT-based service according to an embodiment.

Referring to FIG. 11, an external electronic device(s) 1100 (e.g., an electronic device 102 or an electronic device 104 in FIG. 1, an external electronic device(s) 220 in FIG. 2, or an external electronic device 220 in FIG. 4B, 6, 7, 8, or 10) may be a Direct connected device directly connected to a server 230 (e.g., a server 108 in FIG. 1, or a server 230 in FIG. 2, 4A, 6, 7, 9, or 10). Another external electronic device(s) 1110 may be a Hub connected device connected to the server 230 via a hub 210 (e.g., a hub 210 in FIG. 2, 9, or 10). According to an embodiment, if there is no Hub connected device connected to the hub 210, the hub 210 may operate as the Direct connected device. According to an embodiment, an IoT-based service (e.g., a Samsung^{™} SmartThings service) may include an automation service, and the automation service may include a local automation service which is an automation service performed by the hub 210. For a local automation service, information which is identical to information related to an automation service managed in the server 230 (e.g., an automation condition) may be managed in the hub 210.

If there is the other external electronic device(s) 1110, which is the Hub connected device connected to the hub 210, and the hub 210 supports the local automation service, a connection state (e.g., a Full connection state, a Partial connection state, and/or a No connection state) of the hub 210 may be managed based on time during which the hub 210 does not transmit a command for the local automation service to the other external electronic device(s) 1110.

Unused time per connection state of the hub 210 may be implemented to be similar to or substantially the same as described in Table 4.

For example, if the connection state of the hub 210 is the Full connection state and unused time, which is time during which a command for a local automation service is not transmitted to the other external electronic device(s) 1110, is less than 28 days, when the hub 210 transmits the command for the local automation service to the other external electronic device(s) 1110, the Full connection state may be maintained and the unused time may be reset.

For example, if the hub 210 does not transmit the command for the local automation service to the other external electronic device(s) 1110 for 29 days or more (for example, if the unused time is 29 days or more), the connection state of the hub 210 may be changed from the Full connection state to the Partial connection state. In the Partial connection state, the hub 210 may transmit only a keep alive signal for maintaining a connection with the server 230, and may not transmit a signal for updating operation status of the other external electronic device(s) 1110 to the server 230 even though the operation status of the other external electronic device(s) 1110 is updated. In this case, the hub 210 may store the operation status of the other external electronic device(s) 1110 in the hub 210 and may not transmit a signal for updating the operation status of the other external electronic device(s) 1110 to the server 230.

In the Partial connection state, if the hub 210 transmits the command for the local automation service to the other external electronic device(s) 1110, the connection state of the hub 210 may be changed from the Partial connection state to the Full connection state. As the connection state of the hub 210 is changed from the Partial connection state to the Full connection state, the unused time of the hub 210 may be reset.

For example, if the connection state of the hub 210 is the No connection state, since the connection state between the server 230 and the hub 210 is released, an electronic device (e.g., an electronic device 101 in FIG. 1, 2, 3, 6, or 8) (e.g., a processor 120 in FIG. 1 or a processor 304 in FIG. 3) related to the hub 210 may output a guide message for changing a connection of the electronic device to a device-to-device (D2D) connection. The guide message may be provided, for example, in a form of a UI pop-up. For example, the guide message may be a message for announcing that the connection between the server 230 and the hub 210 is released as the hub 210 is not used for a long time in the local automation service, and user manipulation for the reconnection between the hub 210 and the electronic device. By outputting the guide message in this way, it may cause a user to easily change the connection between the hub 210 and the electronic device to the D2D connection. The guide message will be described below with reference to FIGS. 12 and 13, so a detailed description thereof will be omitted herein. If it is impossible for the hub 210 and the electronic device to set up the D2D connection, the hub 210 may perform a reconnection operation with the server 230 by checking whether it is possible to sign in during booting.

In the above, the operation in a case that there is the other external electronic device(s) 1110 which is the Hub connected device connected to the hub 210 and the hub 210 supports the local automation service has been described, but an operation in a case that there is the other external electronic device(s) 1110 which is the Hub connected device connected to the hub 210 and the hub 210 does not support the local automation service may also be implemented to be similar to or substantially the same as the operation in a case that there is the other external electronic device(s) 1110 which is the Hub connected device connected to the hub 210 and the hub 210 is able to support the local automation service.

In the above, the operation in a case that there is the other external electronic device(s) 1110 which is the Hub connected device connected to the hub 210 and the hub 210 supports the local automation service has been described, and the operation in a case that there is the other external electronic device(s) 1110 which is the Hub connected device connected to the hub 210 and the hub 210 does not support the local automation service may be described as follows.

If there is the other external electronic device(s) 1110 which is the Hub connected device connected to the hub 210 and the hub 210 does not support the local automation service, the connection state (e.g., the Full connection state, the Partial connection state, and/or the No connection state) of the hub 210 may be managed based on time during which the hub 210 does not transmit the command for the automation service to the other external electronic device(s) 1110 and/or time during which the hub 210 does not transmit an event to the server 230.

The unused time per connection state of the hub 210 may be implemented to be similar to or substantially the same as described in Table 4.

For example, if the connection state of the hub 210 is the Full connection state, the command for the automation service is not transmitted to the other external electronic device(s) 1110, and/or unused time, which is time during which the hub 210 does not transmit an event to the server 230, is 28 days or less, when the hub 210 transmits the command for the automation service to the other external electronic device(s) 1110, and/or when the hub 210 transmits the event to the server 230, the Full connection state may be maintained and the unused time may be reset.

For example, if the hub 210 does not transmit the command for the automation service to the other external electronic device(s) 1110 for 29 days or more, and/or the hub 210 does not transmit the event to the server 230 (for example, if the unused time is 29 days or more), the connection state of the hub 210 may be changed from the Full connection state to the Partial connection state. In the Partial connection state, the hub 210 may transmit only a keep alive signal for maintaining a connection with the server 230, and may not transmit a signal for updating operation status of the other external electronic device(s) 1110 to the server 230 even though the operation status of the other external electronic device(s) 1110 is updated. In this case, the hub 210 may store the operation status of the other external electronic device(s) 1110 in the hub 210 and may not transmit the signal for updating the operation status of the other external electronic device(s) 1110 to the server 230.

In the Partial connection state, if the hub 210 transmits the command for the automation service to the other external electronic device(s) 1110, and/or the hub 210 transmits the event to the server 230, the connection state of the hub 210 may be changed from the Partial connection state to the Full connection state. As the connection state of the hub 210 is changed from the Partial connection state to the Full connection state, the unused time of the hub 210 may be reset.

For example, if the connection state of the hub 210 is the No connection state, since the connection state between the server 230 and the hub 210 is released, an electronic device (e.g., an electronic device 101 in FIG. 1, 2, 3, 6, or 8) (e.g., a processor 120 in FIG. 1 or a processor 304 in FIG. 3) related to the hub 210 may output a guide message for changing a connection of the electronic device to a D2D connection. The guide message may be provided, for example, in a form of a UI pop-up. For example, the guide message may be a message for announcing that the connection between the server 230 and the hub 210 is released as the hub 210 is not used for a long time in the local automation service, and user manipulation for the reconnection between the hub 210 and the electronic device. By outputting the guide message in this way, it may cause a user to easily change the connection between the hub 210 and the electronic device to the D2D connection. The guide message will be described below with reference to FIGS. 12 and 13, so a detailed description thereof will be omitted herein. If it is impossible for the hub 210 and the electronic device to set up the D2D connection, the hub 210 may perform a reconnection operation with the server 230 by checking whether it is possible to sign in during booting.

In the No connection state, since the hub 210 and the server 230 are disconnected, the other external electronic device(s) 1110, which is the Hub connected device, may also be disconnected from the hub 210.

In the above, the operation in a case that there is the other external electronic device(s) 1110 which is the Hub connected device connected to the hub 210 and the hub 210 supports the local automation service, and the operation in a case that there is the other external electronic device(s) 1110 which is the Hub connected device connected to the hub 210 and the hub 210 does not support the local automation service have been described, and if the hub 210 and the electronic device exist in the same network (for example, if the hub 210 and the electronic device use the same access point (AP)), when a user only identifies the connection state of the other external electronic device(s) 1110 via the electronic device for less than set time in a set space (e.g., a home and/or an office), the hub 210 may not change the connection state. For example, in the Partial connection state, if the user only identifies the connection state of the other external electronic device(s) 1110 via the electronic device for less than the set time in the set space (e.g., the home and/or the office), the hub 210 may maintain the Partial connection state as it is.

FIG. 12 is a diagram for describing a guide message provided in a No connection state according to an embodiment.

Referring to FIG. 12, an IoT-based application (e.g., Samsung^{™} SmartThings application) executed in an electronic device (e.g., an electronic device 101 in FIG. 1, 2, 3, 6, or 8) (e.g., a processor 120 in FIG. 1 or a processor 304 in FIG. 3) may provide a device card which manages operation status of an external electronic device (e.g., an electronic device 102 or an electronic device 104 in FIG. 1, an external electronic device(s) 220 in FIG. 2, an external electronic device(s) 220 in FIG. 4B, 6, 7, 8, or 10, or an external electronic device(s) 1110 or another external electronic device(s) 1110 in FIG. 11). In FIG. 12, it will be assumed that the external electronic device is a TV.

If a screen 1220 for informing details related to a No connection state is selected via a summary screen 1210 about places included in an IoT network (e.g., a home network), the electronic device may provide a guide message 1230 on the screen 1220. The guide message 1230 may be provided, for example, in a form of a UI pop-up. In FIG. 12, the No connection state is shown as "Offline." For example, the guide message 1230 may be a message for announcing that the connection between a server (e.g., a server 108 in FIG. 1, or a server 230 in FIG. 2, 4A, 6, 7, 8, 9, 10, or 11) and the external electronic device is released as the external electronic device is not used for a long time in the IoT-based service, and user manipulation for the reconnection between the server and the external electronic device. By outputting the guide message 1230 in this way, it may cause a user to easily attempt to reconnect the server and the external electronic device. For example, the guide message 1230 may be a message for changing a connection between a hub (e.g., a hub 210 in FIG. 2, 9, 10, or 11) and the electronic device to a device-to-device (D2D) connection. For example, the guide message may be a message for announcing that the connection between the server and the hub is released as the hub is not used for a long time in the local automation service, and user manipulation for the reconnection between the hub and the electronic device. By outputting the guide message in this way, it may cause a user to easily change the connection between the hub and the electronic device to the D2D connection.

FIG. 13 is a diagram for describing a guide message provided in a No connection state according to an embodiment.

Referring to FIG. 13, an IoT-based application (e.g., Samsung^{™} SmartThings application) executed in an electronic device (e.g., an electronic device 101 in FIG. 1, 2, 3, 6, or 8) (e.g., a processor 120 in FIG. 1 or a processor 304 in FIG. 3) may provide a device card which manages operation status of an external electronic device (e.g., an electronic device 102 or an electronic device 104 in FIG. 1, an external electronic device(s) 220 in FIG. 2, an external electronic device(s) 220 in FIG. 4B, 6, 7, 8, or 10, or an external electronic device(s) 1110 or another external electronic device(s) 1110 in FIG. 11). In FIG. 13, it will be assumed that the external electronic device is a TV.

A guide message 1320 may be outputted via the device card related to the TV on a summary screen 1310 for places included in an IoT network (e.g., a home network). As the guide message 1320 is outputted via the device card related to the TV on the summary screen 1310, if a screen 1330 for informing details related to a No connection state is selected, the electronic device may not output the guide message on the screen 1330. The guide message 1320 may be provided, for example, in a form of a UI pop-up. In FIG. 12, the No connection state is shown as "Offline." For example, the guide message 1320 may be a message for announcing that the connection between a server (e.g., a server 108 in FIG. 1, or a server 230 in FIG. 2, 4A, 6, 7, 8, 9, 10, or 11) and the external electronic device is released as the external electronic device is not used for a long time in the IoT-based service, and user manipulation for the reconnection between the server and the external electronic device. By outputting the guide message 1230 in this way, it may cause a user to easily attempt to reconnect the server and the external electronic device. For example, the guide message 1320 may be a message for changing a connection between a hub (e.g., a hub 210 in FIG. 2, 9, 10, or 11) and the electronic device to a device-to-device (D2D) connection. For example, the guide message may be a message for announcing that the connection between the server and the hub is released as the hub is not used for a long time in the local automation service, and user manipulation for the reconnection between the hub and the electronic device. By outputting the guide message in this way, it may cause a user to easily change the connection between the hub and the electronic device to the D2D connection.

According to an embodiment of the disclosure, a method may comprise receiving, from a server (108; 230), information about a connection state of at least one external electronic device (102; 104; 220; 1100; 1110) related to the electronic device.

According to an embodiment of the disclosure, the method may comprise performing at least one operation corresponding to the connection state of the at least one external electronic device.

According to an embodiment of the disclosure, the connection state of the at least one external electronic device may include at least one of a first connection state in which unused time of a service in the at least one external electronic device is less than first time, a second connection state in which the unused time of the service in the at least one external electronic device is greater than or equal to the first time and less than second time, or a third connection state in which the unused time of the service in the at least one external electronic device is greater than or equal to the second time.

According to an embodiment of the disclosure, in case that the connection state is the first connection state, the at least one operation corresponding to the connection state may comprise transmitting, to the server, a signal commanding the server to reset the unused time of the at least one external electronic device.

According to an embodiment of the disclosure, in case that the connection state is the second connection state, the at least one operation corresponding to the connection state may comprise transmitting, to the server, a signal commanding the server to reset the unused time of the service in the at least one external electronic device.

According to an embodiment of the disclosure, in case that the connection state is the second connection state, the at least one operation corresponding to the connection state may comprise receiving, from the server, a signal for updating operation status of the at least one external electronic device.

According to an embodiment of the disclosure, in case that the connection state is the second connection state, the at least one operation corresponding to the connection state may comprise updating the operation status of the at least one external electronic device, based on the signal for updating the operation status of the at least one external electronic device.

According to an embodiment of the disclosure, in case that the connection state is the third connection state, the at least one operation corresponding to the connection state may comprise outputting a message for guiding a user manipulation for reconnection between the server and the at least one external electronic device.

According to an embodiment of the disclosure, receiving the information about the connection state of the at least one external electronic device may comprise receiving, from the server, the information about the connection state of the at least one external electronic device, based on identifying a start of the service.

According to an embodiment of the disclosure, the first connection state may include a state in which at least one of data or control information is exchanged between the at least one external electronic device and the server.

According to an embodiment of the disclosure, the second connection state may include a state in which only a keep alive signal is exchanged between the at least one external electronic device and the server.

According to an embodiment of the disclosure, the third connection state may include a state in which a connection between the at least one external electronic device and the server is released.

According to an embodiment of the disclosure, a method may comprise receiving information related to unused time per connection state of the electronic device from a server (108; 230).

According to an embodiment of the disclosure, the method may comprise setting a connection state based on the information and unused time of a service.

According to an embodiment of the disclosure, the method may comprise performing at least one operation corresponding to the set connection state.

According to an embodiment of the disclosure, the connection state may include at least one of a first connection state in which the unused time of the service is less than first time, a second connection state in which the unused time of the service is greater than or equal to the first time and less than second time, or a third connection state in which the unused time of the service is greater than or equal to the second time.

According to an embodiment of the disclosure, in case that the connection state is the first connection state, the at least one operation corresponding to the connection state may comprise receiving, from the server, a signal commanding to reset the unused time of the service.

According to an embodiment of the disclosure, in case that the connection state is the first connection state, the at least one operation corresponding to the connection state may comprise resetting the unused time of the service based on the signal.

According to an embodiment of the disclosure, in case that the connection state is the first connection state, the at least one operation corresponding to the connection state may comprise transmitting, to the server, a keep alive signal.

According to an embodiment of the disclosure, in case that the connection state is the second connection state, the at least one operation corresponding to the connection state may comprise receiving, from the server, a signal commanding to reset the unused time of the service.

According to an embodiment of the disclosure, in case that the connection state is the second connection state, the at least one operation corresponding to the connection state may comprise resetting the unused time of the service based on the signal.

According to an embodiment of the disclosure, in case that the connection state is the second connection state, the at least one operation corresponding to the connection state may comprise changing the connection state from the second connection state to the first connection state.

According to an embodiment of the disclosure, in case that the connection state is the second connection state, the at least one operation corresponding to the connection state may comprise transmitting, to the server, a signal requesting to change the connection state of the electronic device from the second connection state to the first connection state.

According to an embodiment of the disclosure, in case that the connection state is the second connection state, the at least one operation corresponding to the connection state may comprise transmitting, to the server, a signal for updating an operation status of the electronic device after transmitting the signal requesting to change the connection state of the electronic device from the second connection state to the first connection state.

According to an embodiment of the disclosure, in case that the connection state is the second connection state, the at least one operation corresponding to the connection state may comprise transmitting, to the server, a keep alive signal.

According to an embodiment of the disclosure, the first connection state may include a state in which at least one of data or control information is exchanged between the electronic device and the server.

According to an embodiment of the disclosure, the second connection state may include a state in which only a keep alive signal is exchanged between the electronic device and the server.

According to an embodiment of the disclosure, the third connection state may include a state in which a connection between the electronic device and the server is released.

According to an embodiment of the disclosure, a method may comprise transmitting, to an electronic device (101), information about a connection state of at least one external electronic device (102; 104; 220; 1100; 1110) related to the electronic device.

According to an embodiment of the disclosure, the method may comprise performing at least one operation corresponding to the connection state of the at least one external electronic device.

According to an embodiment of the disclosure, the connection state of the at least one external electronic device may include at least one of a first connection state in which unused time of a service in the at least one external electronic device is less than first time, a second connection state in which the unused time of the service in the at least one external electronic device is greater than or equal to the first time and less than second time, or a third connection state in which the unused time of the service in the at least one external electronic device is greater than or equal to the second time.

According to an embodiment of the disclosure, in case that the connection state is the first connection state, the at least one operation corresponding to the connection state may comprise receiving, from the electronic device, a first signal commanding the server to reset the unused time of the at least one external electronic device.

According to an embodiment of the disclosure, in case that the connection state is the first connection state, the at least one operation corresponding to the connection state may comprise transmitting, to the at least one external electronic device, a second signal commanding to reset the unused time of the at least one external electronic device based on the first signal.

According to an embodiment of the disclosure, in case that the connection state is the first connection state, the at least one operation corresponding to the connection state may comprise receiving, from the at least one external electronic device, a keep alive signal.

According to an embodiment of the disclosure, in case that the connection state is the second connection state, the at least one operation corresponding to the connection state may comprise receiving, from the electronic device, a first signal commanding the server to reset the unused time of the at least one external electronic device.

According to an embodiment of the disclosure, in case that the connection state is the second connection state, the at least one operation corresponding to the connection state may comprise transmitting, to the at least one external electronic device, a second signal commanding to reset the unused time of the at least one external electronic device based on the first signal.

According to an embodiment of the disclosure, in case that the connection state is the second connection state, the at least one operation corresponding to the connection state may comprise receiving, from the at least one external electronic device, a third signal requesting to change the connection state of the at least one external electronic device from the second connection state to the first connection state.

According to an embodiment of the disclosure, in case that the connection state is the second connection state, the at least one operation corresponding to the connection state may comprise changing the connection state of the at least one external electronic device from the second connection state to the first connection state based on the third signal.

According to an embodiment of the disclosure, in case that the connection state is the second connection state, the at least one operation corresponding to the connection state may comprise receiving, from the at least one external electronic device, a fourth signal for updating operation status of the at least one external electronic device.

According to an embodiment of the disclosure, in case that the connection state is the second connection state, the at least one operation corresponding to the connection state may comprise transmitting, to the electronic device, a fifth signal for updating the operation status of the at least one external electronic device based on the fourth signal.

According to an embodiment of the disclosure, in case that the connection state is the second connection state, the at least one operation corresponding to the connection state may comprise receiving a keep alive signal from the at least one external electronic device.

According to an embodiment of the disclosure, the method may comprise receiving, from the electronic device, a message requesting information about the connection state of the at least one external electronic device before transmitting the information about the connection state of the at least one external electronic device.

According to an embodiment of the disclosure, the first connection state may include a state in which at least one of data or control information is exchanged between the at least one external electronic device and the server.

According to an embodiment of the disclosure, the second connection state may include a state in which only a keep alive signal is exchanged between the at least one external electronic device and the server.

According to an embodiment of the disclosure, the third connection state may include a state in which a connection between the at least one external electronic device and the server is released.

According to an embodiment of the disclosure, a computer readable medium storing at least one instruction is provided, and the at least one instruction, when executed by a processor (120; 304) of an electronic device (101), causes the electronic device to perform at least one operation.

According to an embodiment of the disclosure, the at least one operation comprises receiving, from a server (108; 230), information about a connection state of at least one external electronic device (102; 104; 220; 1100; 1110) related to the electronic device.

According to an embodiment of the disclosure, the at least one operation comprises performing at least one operation corresponding to the connection state of the at least one external electronic device.

According to an embodiment of the disclosure, the connection state of the at least one external electronic device includes at least one of a first connection state in which unused time of a service in the at least one external electronic device is less than first time, a second connection state in which the unused time of the service in the at least one external electronic device is greater than or equal to the first time and less than second time, or a third connection state in which the unused time of the service in the at least one external electronic device is greater than or equal to the second time.

According to an embodiment of the disclosure, a computer readable medium storing at least one instruction is provided, and the at least one instruction, when executed by a processor (454) of an electronic device (102; 104; 220; 1100; 1110), causes the electronic device to perform at least one operation.

According to an embodiment of the disclosure, the at least one operation comprises receiving information related to unused time per connection state of the electronic device from a server (108; 230).

According to an embodiment of the disclosure, the at least one operation comprises setting a connection state based on the information and unused time of a service.

According to an embodiment of the disclosure, the at least one operation comprises performing at least one operation corresponding to the set connection state.

According to an embodiment of the disclosure, the connection state includes at least one of a first connection state in which the unused time of the service is less than first time, a second connection state in which the unused time of the service is greater than or equal to the first time and less than second time, or a third connection state in which the unused time of the service is greater than or equal to the second time.

According to an embodiment of the disclosure, a computer readable medium storing at least one instruction is provided, and the at least one instruction, when executed by a processor (404) of a server (108; 230), causes the electronic device to perform at least one operation.

According to an embodiment of the disclosure, the at least one operation comprises transmitting, to an electronic device (101), information about a connection state of at least one external electronic device (102; 104; 220; 1100; 1110) related to the electronic device.

According to an embodiment of the disclosure, the at least one operation comprises performing at least one operation corresponding to the connection state of the at least one external electronic device.

According to an embodiment of the disclosure, the connection state of the at least one external electronic device includes at least one of a first connection state in which unused time of a service in the at least one external electronic device is less than first time, a second connection state in which the unused time of the service in the at least one external electronic device is greater than or equal to the first time and less than second time, or a third connection state in which the unused time of the service in the at least one external electronic device is greater than or equal to the second time.

According to an embodiment of the disclosure, an operating method of an electronic device (102; 104; 220; 1100; 1110) may comprise obtaining information related to an unused period based on last used time of the electronic device.

According to an embodiment of the disclosure, the operating method may comprise determining operation status of the electronic device based on the obtained information.

According to an embodiment of the disclosure, the operating method may comprise, based on the determined operation status being a first state: maintaining a connection between a server (108; 230) and the electronic device, transmitting, to the server, information related to an operation and/or the operation status of the electronic device, and transmitting, to the server, a keep alive message at a first time interval.

According to an embodiment of the disclosure, the operating method may comprise, based on the determined operation status being changed from the first state to a second state: maintaining the connection between the server and the electronic device, and transmitting, to the server, a signal indicating that the operation status of the electronic device has been changed to the second state, and refraining from transmitting, to the server, the information related to the operation and/or the operation status of the electronic device.

According to an embodiment of the disclosure, the operating method may comprise, based on the determined operation status being changed from the second state to a third state: transmitting, to the server, a signal indicating that the operation status of the electronic device has been changed to the third state.

According to an embodiment of the disclosure, the first state may correspond to the unused time of a service being less than a first period, the second state may correspond to the unused time of the service being greater than the first period and less than or equal to a second period, and the third state may correspond to the unused time of the service being greater than the second period.

According to an embodiment of the disclosure, the unused period may be reset based on an occurrence of an event related to usage of the service.

According to an embodiment of the disclosure, the first period and the second period may be defined based on a device type corresponding to the electronic service.

According to an embodiment of the disclosure, the operating method may comprise identifying the occurrence of the event related to the usage of the service in the second state, and changing the operation status of the electronic device from the second state to the first state.

According to an embodiment of the disclosure, the operating method may comprise transmitting, to the server, a signal indicating that the operation status of the electronic device has been changed to the first state.

According to an embodiment of the disclosure, the operating method may comprise, after transmitting the signal indicating that the operation status of the electronic device has been changed to the first state, receiving, from the server, a signal requesting the electronic device to reset the unused period, and in response to the signal requesting the electronic device to reset the unused period, resetting the unused period.

According to an embodiment of the disclosure, the operating method may comprise identifying the occurrence of the event related to the usage of the service in the third state, establishing a connection between the server and the electronic device, and changing the operation status of the electronic device from the third state to the first state.

According to an embodiment of the disclosure, the operating method may comprise transmitting, to the server, a signal indicating that the operation status of the electronic device has been changed to the first state.

According to an embodiment of the disclosure, the information related to the unused period based on the last used time of the electronic device may be received from the server.

According to an embodiment of the disclosure, obtaining the information related to the unused period based on the last used time of the electronic device may comprise identifying the last used time of the service of the electronic device, and identifying the unused period based on the last used time of the service of the electronic device to obtain the information related to the unused period based on the last used time of the electronic device.

According to an embodiment of the disclosure, the operating method may comprise transmitting, to the server via the communication circuitry, a keep alive message at a second time interval in the second state.

According to an embodiment of the disclosure, the second time interval may be longer than or equal to the first time interval.

According to an embodiment of the disclosure, the information related to the operation and/or the operation status of the electronic device may include information indicating that the operation and/or the operation status of the electronic device have been changed.

According to an embodiment of the disclosure, the operating method may comprise identifying the occurrence of the event related to the usage of the service in the first state, and transmitting, to the server, a signal indicating that the operation status of the electronic device is the first state.

According to an embodiment of the disclosure, the operating method may comprise, after transmitting the signal indicating that the operation status of the electronic device is the first state, receiving, from the server, a signal requesting the electronic device to reset the unused period, and in response to the signal requesting the electronic device to reset the unused period, resetting the unused period.

According to an embodiment of the disclosure, an operating method of a server (108; 230) may comprise transmitting, to an electronic device (102; 104; 220; 1100; 1110), information about a first state corresponding to an unused period of a service less than a first period, a second state corresponding to the unused time of the service greater than the first period and less than or equal to a second period, and a third state corresponding to the unused time of the service greater than the second period.

According to an embodiment of the disclosure, the operating method may comprise, based on receiving, from the electronic device, a signal indicating that operation status of the electronic device is the first state: receiving, from an external electronic device (101), a signal requesting to reset the unused period of the electronic device, and transmitting, to the electronic device, a signal requesting the electronic device to reset the unused period of the electronic device, after receiving the signal requesting to reset the unused period of the electronic device.

According to an embodiment of the disclosure, the operating method may comprise, based on receiving, from the electronic device, a signal indicating that the operation status of the electronic device is the second state: receiving, from the external electronic device, the signal requesting to reset the unused period of the electronic device, transmitting, to the electronic device, the signal requesting the electronic device to reset the unused period of the electronic device, after receiving the signal requesting to reset the unused period of the electronic device, and receiving, from the electronic device, a signal indicating that the operation status of the electronic device has been changed to the first state.

According to an embodiment of the disclosure, the operating method may comprise receiving, from the electronic device, a signal indicating that the operation status of the electronic device is the third state.

According to an embodiment of the disclosure, a non-transitory computer readable medium storing one or more instructions may be provided.

According to an embodiment of the disclosure, the one or more instructions, when executed by one or more processors (454) of an electronic device (102; 104; 220; 1100; 1110) individually or collectively, may cause the electronic device to perform one or more operations.

According to an embodiment of the disclosure, the one or more operations may comprise obtaining information related to an unused period based on last used time of the electronic device.

According to an embodiment of the disclosure, the one or more operations may comprise determining operation status of the electronic device based on the obtained information.

According to an embodiment of the disclosure, the one or more operations may comprise, based on the determined operation status being a first state: maintaining a connection between a server (108; 230) and the electronic device, transmitting, to the server, information related to an operation and/or the operation status of the electronic device, and transmitting, to the server, a keep alive message at a first time interval.

According to an embodiment of the disclosure, the one or more operations may comprise, based on the determined operation status changing from the first state to a second state: maintaining the connection between the server and the electronic device, and transmitting, to the server, a signal indicating that the operation status of the electronic device has been changed to the second state, and refraining from transmitting, to the server, the information related to the operation and/or the operation status of the electronic device.

According to an embodiment of the disclosure, the one or more operations may comprise, based on the determined operation status being changed from the second state to a third state: transmitting, to the server, a signal indicating that the operation status of the electronic device has been changed to the third state.

According to an embodiment of the disclosure, the first state may correspond to the unused time of a service being less than a first period, the second state may correspond to the unused time of the service being greater than the first period and less than or equal to a second period, and the third state may correspond to the unused time of the service being greater than the second period.

According to an embodiment of the disclosure, the unused period may be reset based on an occurrence of an event related to usage of the service.

## Claims

1. An electronic device (102; 104; 220; 1100; 1110), comprising:
communication circuitry (452);
one or more processors (454) comprising processing circuitry; and
memory (456) storing instructions that, when executed by the one or more processors individually or collectively, cause the electronic device to:
obtain information related to an unused period based on last used time of the electronic device,
determine operation status of the electronic device based on the obtained information,
based on the determined operation status being a first state:
maintain a connection between a server (108; 230) and the electronic device,
transmit, to the server via the communication circuitry, information related to an operation and/or the operation status of the electronic device, and
transmit, to the server via the communication circuitry, a keep alive message at a first time interval,
based on the determined operation status being changed from the first state to a second state:
maintain the connection between the server and the electronic device, and transmit, to the server via the communication circuitry, a signal indicating that the operation status of the electronic device has been changed to the second state, and
refrain from transmitting, to the server via the communication circuitry, the information related to the operation and/or the operation status of the electronic device,
based on the determined operation status being changed from the second state to a third state:
transmit, to the server via the communication circuitry, a signal indicating that the operation status of the electronic device has been changed to the third state,
wherein the first state corresponds to the unused time of a service being less than a first period, the second state corresponds to the unused time of the service being greater than the first period and less than or equal to a second period, and the third state corresponds to the unused time of the service being greater than the second period, and
wherein the unused period is reset based on an occurrence of an event related to usage of the service.

2. The electronic device of claim 1, wherein the first period and the second period are defined based on a device type corresponding to the electronic service.

3. The electronic device of claim 1 or 2, wherein the instructions, when executed by the one or more processors individually or collectively, cause the electronic device to:
identify the occurrence of the event related to the usage of the service in the second state, and
change the operation status of the electronic device from the second state to the first state.

4. The electronic device of claim 3, wherein the instructions, when executed by the one or more processors individually or collectively, cause the electronic device to:
transmit, to the server via the communication circuitry, a signal indicating that the operation status of the electronic device has been changed to the first state.

5. The electronic device of claim 4, wherein the instructions, when executed by the one or more processors individually or collectively, cause the electronic device to:
after transmitting the signal indicating that the operation status of the electronic device has been changed to the first state, receive, from the server via the communication circuitry, a signal requesting the electronic device to reset the unused period, and
in response to the signal requesting the electronic device to reset the unused period, reset the unused period.

6. The electronic device of claim 1 or 2, wherein the instructions, when executed by the one or more processors individually or collectively, cause the electronic device to:
identify the occurrence of the event related to the usage of the service in the third state,
establish a connection between the server and the electronic device, and
change the operation status of the electronic device from the third state to the first state.

7. The electronic device of claim 6, wherein the instructions, when executed by the one or more processors individually or collectively, cause the electronic device to:
transmit, to the server via the communication circuitry, a signal indicating that the operation status of the electronic device has been changed to the first state.

8. The electronic device of any one of claims 1 to 7, wherein the information related to the unused period based on the last used time of the electronic device is received from the server.

9. The electronic device of any one of claims 1 to 7, wherein the instructions, when executed by the one or more processors individually or collectively, cause the electronic device to, as at least part of obtaining the information related to the unused period based on the last used time of the electronic device:
identify the last used time of the service of the electronic device, and
identify the unused period based on the last used time of the service of the electronic device to obtain the information related to the unused period based on the last used time of the electronic device.

10. The electronic device of claim 1, wherein the instructions, when executed by the one or more processors individually or collectively, cause the electronic device to:
transmit, to the server via the communication circuitry, a keep alive message at a second time interval in the second state, and
wherein the second time interval is longer than or equal to the first time interval.

11. The electronic device of any one of claims 1 to 10, wherein the information related to the operation and/or the operation status of the electronic device includes information indicating that the operation and/or the operation status of the electronic device have been changed.

12. The electronic device of claim 1 or 2, wherein the instructions, when executed by the one or more processors individually or collectively, cause the electronic device to:
identify the occurrence of the event related to the usage of the service in the first state, and
transmit, to the server via the communication circuitry, a signal indicating that the operation status of the electronic device is the first state.

13. The electronic device of claim 12, wherein the instructions, when executed by the one or more processors individually or collectively, cause the electronic device to:
after transmitting the signal indicating that the operation status of the electronic device is the first state, receive, from the server via the communication circuitry, a signal requesting the electronic device to reset the unused period, and
in response to the signal requesting the electronic device to reset the unused period, reset the unused period.

14. A server (108; 230), comprising:
communication circuitry (402);
one or more processors (404) comprising processing circuitry; and
memory (406) storing instructions that, when executed by the one or more processors individually or collectively, cause the server to:
transmit, to an electronic device (102; 104; 220; 1100; 1110) via the communication circuitry, information about a first state corresponding to an unused period of a service less than a first period, a second state corresponding to the unused time of the service greater than the first period and less than or equal to a second period, and a third state corresponding to the unused time of the service greater than the second period,
based on receiving, from the electronic device via the communication circuitry, a signal indicating that operation status of the electronic device is the first state:
receive, from an external electronic device (101) via the communication circuitry, a signal requesting to reset the unused period of the electronic device, and
transmit, to the electronic device via the communication circuitry, a signal requesting the electronic device to reset the unused period of the electronic device, after receiving the signal requesting to reset the unused period of the electronic device,
based on receiving, from the electronic device via the communication circuitry, a signal indicating that the operation status of the electronic device is the second state:
receive, from the external electronic device via the communication circuitry, the signal requesting to reset the unused period of the electronic device,
transmit, to the electronic device via the communication circuitry, the signal requesting the electronic device to reset the unused period of the electronic device, after receiving the signal requesting to reset the unused period of the electronic device, and
receive, from the electronic device via the communication circuitry, a signal indicating that the operation status of the electronic device has been changed to the first state,
receive, from the electronic device via the communication circuitry, a signal indicating that the operation status of the electronic device is the third state.

15. A non-transitory computer readable medium storing one or more instructions, wherein the one or more instructions, when executed by one or more processors (454) of an electronic device (102; 104; 220; 1100; 1110) individually or collectively, causes the electronic device to perform one or more operations,
the one or more operations comprising:
obtaining information related to an unused period based on last used time of the electronic device;
determining operation status of the electronic device based on the obtained information;
based on the determined operation status being a first state:
maintaining a connection between a server (108; 230) and the electronic device,
transmitting, to the server, information related to an operation and/or the operation status of the electronic device, and
transmitting, to the server, a keep alive message at a first time interval,
based on the determined operation status changing from the first state to a second state:
maintaining the connection between the server and the electronic device, and transmitting, to the server, a signal indicating that the operation status of the electronic device has been changed to the second state, and
refraining from transmitting, to the server, the information related to the operation and/or the operation status of the electronic device,
based on the determined operation status being changed from the second state to a third state:
transmitting, to the server, a signal indicating that the operation status of the electronic device has been changed to the third state,
wherein the first state corresponds to the unused time of a service being less than a first period, the second state corresponds to the unused time of the service being greater than the first period and less than or equal to a second period, and the third state corresponds to the unused time of the service being greater than the second period, and
wherein the unused period is reset based on an occurrence of an event related to usage of the service.
